# EUROPEAN PATENT APPLICATION

(11) **EP 4 443 959 A1**
(43) Date of publication of application: **09.10.2024**
(21) Application number: 22914458.9
(22) Date of filing: 21.12.2022
(51) Int. Cl.: H04W 28/16

(54) **NETWORK RESOURCE MANAGEMENT METHOD AND COMMUNICATION APPARATUS**

(30) Priority: 31.12.2021 CN 202111682951
(71) Applicant: Huawei Technologies Co., Ltd., Shenzhen, Guangdong 518129 (CN)
(72) Inventor: WU, Shaoyun, Shenzhen, Guangdong 518129 (CN); XING, Weijun, Shenzhen, Guangdong 518129 (CN)
(74) Representative: Körber, Martin Hans
(86) International application number: PCT/CN2022/140754
(87) International publication number: WO 2023/125204

(57) **Abstract**

This application provides a network resource management method and a communication apparatus. The network resource management method includes: A terminal device generates a request message, where the request message is used to operate a life cycle of a target network (S301), and the request message is control plane signaling or user plane signaling between the terminal device and a core network device. The terminal device sends the request message to the core network device (S302). The core network device operates, based on the request message, the life cycle that is of the target network and that is managed by the core network device (S303). In this network resource management method, a user may directly modify the target network that provides a network service for the user. In comparison with a manner in which the user modifies the target network by using an operator, a period for modification of the target network to take effect is shortened, thereby improving efficiency.

## Description

This application claims priority to Chinese Patent Application No. 202111682951.8, filed with the China National Intellectual Property Administration on December 31, 2021 and entitled "NETWORK RESOURCE MANAGEMENT METHOD AND COMMUNICATION APPARATUS", which is incorporated herein by reference in its entirety.

### TECHNICAL FIELD

This application relates to the field of communication technologies, and in particular, to a network resource management method and a communication apparatus.

### BACKGROUND

In a process in which a user uses a mobile network, the mobile network may provide a network service (for example, a data transmission service such as a voice service) for the user, and the user may alternatively interfere with the mobile network, so that the mobile network meets a current service requirement of the user. For example, in a process in which a user A uses the mobile network, if a charging package of the mobile network is modified, the mobile network modifies, based on a modified charging package, the mobile network corresponding to the user A, for example, modifies a parameter such as a transmission rate or a capacity of the mobile network.

Usually, a procedure in which the user interferes with (or modifies) the mobile network may be briefly described as follows: The user interacts with an operator of the mobile network about a user requirement; and after understanding the user requirement, the operator modifies a configuration of the mobile network by using a business support system (business support system, BSS) and an operation support system (operation support system, OSS), so that the modified mobile network meets the user requirement.

It can be learned that it takes a long time to validate the mobile network that is interfered with (or modified) by the user with the help of the operator and efficiency is low.

### SUMMARY

Embodiments of this application provide a network resource management method and a communication apparatus, to improve network resource management efficiency.

According to a first aspect, an embodiment of this application provides a network resource management method. In the method, a terminal device determines a request message, where the request message is used to operate a life cycle of a target network, and the request message is control plane signaling or user plane signaling between the terminal device and a core network. The terminal device sends the request message to the core network. The core network operates, based on the request message, the life cycle that is of the target network and that is managed by the core network.

Based on the method described in the first aspect, a user may directly operate, based on the control plane signaling or the user plane signaling between the user and the core network, the target network that provides a user service. In comparison with a manner in which the user operates the target network through an operator network, a period for the operation to take effect can be shortened, thereby improving efficiency of operating the target network.

In a possible implementation, the target network is a user service function entity or another network function that provides a service for a user. When this possible implementation is implemented, the terminal device may directly operate, based on the control plane signaling or the user plane signaling between the terminal device and the core network, the user service function entity or the another network function that provides a service for the user.

In a possible implementation, the target network includes a network function that provides a network service for the terminal device, one virtual machine or a group of virtual machines, a container, a process, or another set of executable resources.

In a possible implementation, the request message includes information about an operation type, and the operation type includes one of creating the target network, deleting the target network, modifying a running state of the target network, or modifying a network attribute of the target network. When this possible implementation is implemented, the terminal device may perform, based on the control plane signaling or the user plane signaling between the terminal device and the core network, operations of creating the target network, deleting the target network, modifying the running state, and modifying the network attribute.

In a possible implementation, the modifying the running state of the target network includes suspending the target network or resuming the target network. When this possible implementation is implemented, the terminal device may update the running state of the target network based on a user requirement. For example, when the terminal device temporarily does not need the target network to provide the network service, the terminal device may choose to suspend the target network to reduce system power consumption. When the terminal device needs the target network to provide the network service, the terminal device selects to resume the target network to meet the user requirement.

In a possible implementation, the modifying the network attribute of the target network includes one or more of modifying a capacity of the target network, modifying a capability of the target network, modifying a configuration policy of the target network, or modifying a service user list of the target network. When this possible implementation is implemented, the terminal device may modify the network attribute of the target network based on a user requirement, so that the target network better meets the user requirement.

In a possible implementation, the core network performs operation authentication based on the request message. When a result of the operation authentication indicates a success, the core network operates the life cycle of the target network. Alternatively, when a result of the operation authentication indicates a failure, the core network does not operate the life cycle of the target network. When this possible implementation is implemented, the core network operates the life cycle of the target network based on the request from the terminal device only when the result of the operation authentication indicates the success, so that system security can be improved.

In a possible implementation, the core network device authenticates a status of the target network based on the operation type. Alternatively, the core network authenticates operation permission of the operation type. When this possible implementation is implemented, a case in which the core network performs an invalid operation based on an error request message sent by the terminal device is avoided, to reduce system power consumption.

In a possible implementation, if the operation type matches the status of the target network, the core network successfully authenticates the status of the target network.

In a possible implementation, if the operation type does not match the status of the target network, the core network fails to authenticate the status of the target network.

When the foregoing possible implementation is implemented, the matching between the operation type and the status of the target network is used as a filtering condition, to avoid a case in which the core network still needs to perform the invalid operation on the life cycle of the target network based on the error request message after the terminal device sends the error request message, so that power consumption is reduced.

In a possible implementation, the status of the target network includes an existent state and a non-existent state, and that the operation type does not match the status of the target network includes: when the operation type is creating the target network, the status of the target network is the existent state; when the operation type is deleting the target network, the status of the target network is the non-existent state; when the operation type is modifying the network attribute of the target network, the status of the target network is the non-existent state; or when the operation type is modifying the running state of the target network, the status of the target network is the non-existent state.

In a possible implementation, the status of the target network includes an existent state and a non-existent state, and that the operation type matches the status of the target network includes: when the operation type is creating the target network, the status of the target network is the non-existent state; when the operation type is deleting the target network, the status of the target network is the existent state; when the operation type is modifying the network attribute of the target network, the status of the target network is the existent state; or when the operation type is modifying the running state of the target network, the status of the target network is the existent state.

In the foregoing possible implementation, some specific examples in which the operation type does not match (or matches) the status of the target network are provided.

In a possible implementation, the existent state includes a suspended state or an activated state, and when the operation type is modifying the running state of the target network, that the operation type does not match the status of the target network further includes: when the operation type is suspending the target network, the status of the target network is the suspended state; or when the operation type is resuming the target network, the status of the target network is the activated state.

In a possible implementation, the existent state includes a suspended state or an activated state, and when the operation type is modifying the running state of the target network, that the operation type matches the status of the target network further includes: when the operation type is suspending the target network, the status of the target network is the activated state; or when the operation type is resuming the target network, the status of the target network is the suspended state.

In the foregoing possible implementation, some specific examples in which the operation type does not match (or matches) the status of the target network are provided.

In a possible implementation, the core network includes a first functional network element and a second functional network element, and there is a communication connection between the first functional network element and the second functional network element. The first functional network element is configured to perform operation authentication based on a request message. The second functional network element is configured to operate a life cycle of a target network when a result of the operation authentication indicates a success. When this possible implementation is implemented, a specific architecture of a core network device that operates the target network is provided.

In a possible implementation, after the first functional network element performs the operation authentication based on the request message, when the result of the operation authentication indicates the success, the first functional network element sends an indication message (or a second request message) to the second functional network element, where the indication message (or the second request message) is for requesting the second functional network element to operate the life cycle of the target network. When this possible implementation is implemented, the second functional network element operates the life cycle of the target network only after receiving the indication message (or the second request message) from the first functional network element, thereby improving stability of the target network.

In a possible implementation, the indication message (or the second request message) includes an operation type or an operation parameter corresponding to an operation type. When this possible implementation is implemented, the second functional network element may perform a specific operation on the life cycle of the target network by using the indication message (or the second request message), so that the target network better meets a user requirement.

In a possible implementation, the second functional network element performs identity authentication on the first functional network element. After the identity authentication on the first functional network element succeeds, the second functional network element operates the life cycle of the target network. When this possible implementation is implemented, before the second functional network element operates the life cycle of the target network, the second network performs the identity authentication on the first functional network element, so that security of the target network can be improved.

In a possible implementation, the request message further includes one or more of user information of the terminal device, the operation parameter corresponding to the operation type, or information about the target network. When the possible implementation is implemented, the core network may operate the target network based on the user information, the operation parameter corresponding to the operation type, or the information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the request message further includes the user information of the terminal device, and the core network obtains user subscription information based on the user information. The core network authenticates the operation permission of the operation type based on the user subscription information and/or according to a local configuration policy. When this possible implementation is implemented, a case in which the core network still performs the invalid operation on the life cycle of the target network based on the request message when the terminal device has no operation permission corresponding to the operation type is avoided, to reduce power consumption.

In a possible implementation, the user subscription information includes one or more of an allowed operation action list, an allowed network identifier list, an allowed network capacity quota, the allowed service user list, or the configuration policy list. When this possible implementation is implemented, the operation permission of the terminal device is limited by using the user subscription information, so that the operation permission of the terminal device is authenticated based on the user subscription information.

In a possible implementation, when a result of the operation authentication indicates a success, the core network sends a first response message to the terminal device based on an operation result of operating the life cycle of the target network, where the first response message includes the status of the target network or the identifier of the target network.

In a possible implementation, when a result of the operation authentication indicates a failure, the core network sends a second response message to the terminal device, where the second response message indicates that an operation result of operating the life cycle of the target network indicates a failure. When this possible manner is implemented, the core network feeds back, to the terminal device, the operation result of operating the life cycle of the target network. For the user, the operating the target network by the core network is more open and transparent, thereby improving user experience.

According to a second aspect, an embodiment of this application provides a network resource management method. In the method, a terminal device determines a request message, where the request message is used to operate a life cycle of a target network; and the request message is control plane signaling or user plane signaling between the terminal device and a core network device. The terminal device sends the request message to the core network device.

Based on the network resource management method provided in the second aspect, for beneficial effects of the network resource management method, refer to the beneficial effects of the network resource management method provided in the first aspect. Repeated parts are not described herein again.

In a possible implementation, the request message includes information about an operation type, and the operation type includes one of creating the target network, deleting the target network, modifying a running state of the target network, or modifying a network attribute of the target network.

In a possible implementation, the modifying the running state of the target network includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the terminal device receives a response message sent by the core network device, where the response message indicates a result of operating the life cycle of the target network.

In a possible implementation, the target network is a user service function entity or another network function that provides a service for a user.

In a possible implementation, the target network includes a network function that provides a network service for the terminal device, one virtual machine or a group of virtual machines, a container, a process, or another set of executable resources.

According to a third aspect, an embodiment of this application provides a network resource management method. In the method, a core network device receives a request message from a terminal device, where the request message is used to operate a life cycle of a target network; and the request message is control plane signaling or user plane signaling between the terminal device and a core network device. The core network device operates, based on the request message, the life cycle that is of the target network and that is managed by the core network device.

Based on the network resource management method provided in the third aspect, for beneficial effects of the network resource management method, refer to the beneficial effects of the network resource management method provided in the first aspect. Repeated parts are not described herein again.

In a possible implementation, the request message includes information about an operation type, and the operation type includes one of creating the target network, deleting the target network, modifying a running state of the target network, or modifying a network attribute of the target network.

In a possible implementation, the modifying the running state of the target network includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the core network device performs operation authentication based on the request message. When a result of the operation authentication indicates a success, the core network device operates the life cycle of the target network. Alternatively, when a result of the operation authentication indicates a failure, the core network device does not operate the life cycle of the target network.

In a possible implementation, that the core network device performs operation authentication based on the request message includes one or more of the following: authenticating a status of the target network based on the operation type; or authenticating operation permission of the operation type.

In a possible implementation, if the operation type matches the status of the target network, the core network device successfully authenticates the status of the target network; or if the operation type does not match the status of the target network, the core network device fails to authenticate the status of the target network.

In a possible implementation, the status of the target network includes an existent state or a non-existent state, and that the operation type matches the status of the target network includes: when the operation type is creating the target network, the status of the target network is the non-existent state; when the operation type is deleting the target network, the status of the target network is the existent state; when the operation type is modifying the network attribute of the target network, the status of the target network is the existent state; or when the operation type is modifying the running state of the target network, the status of the target network is the existent state.

In a possible implementation, the existent state includes a suspended state or an activated state, and when the operation type is modifying the running state of the target network, that the operation type matches the status of the target network further includes: when the operation type is suspending the target network, the status of the target network is the activated state; or when the operation type is resuming the target network, the status of the target network is the suspended state.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the core network device obtains user subscription information based on the user information; and authenticates the operation permission of the operation type based on the user subscription information and/or according to a local configuration policy.

In a possible implementation, the user subscription information includes one or more of an allowed operation action list, an allowed network identifier list, an allowed network capacity quota, the allowed service user list, or the configuration policy list.

In a possible implementation, when a result of the operation authentication indicates a success, the core network device sends a first response message to the terminal device based on an operation result of operating the life cycle of the target network, where the first response message includes the status of the target network and the identifier of the target network. Alternatively, when a result of the operation authentication indicates a failure, the core network device sends a second response message to the terminal device, where the second response message indicates that an operation result of operating the life cycle of the target network indicates a failure.

In a possible implementation, the target network is a user service function entity or another network function that provides a service for a user.

According to a fourth aspect, this application provides a communication apparatus. The apparatus may be a terminal device, or may be a chip, a chip system, a processor, or the like that supports a terminal device in implementing the foregoing method, or may be a logical module, a unit, or software that can implement all or some functions of a terminal device. The communication apparatus may alternatively be a chip system. The communication apparatus includes:
a processing unit, configured to determine a request message, where the request message is used to operate a life cycle of a target network; and the request message is control plane signaling or user plane signaling between the terminal device and a core network device; and a transceiver unit, configured to send the request message to the core network device.

Based on the network resource management method provided in the fourth aspect, for beneficial effects of the network resource management method, refer to the beneficial effects of the network resource management method provided in the first aspect or the second aspect. Repeated parts are not described herein again.

In a possible implementation, the request message includes information about an operation type, and the operation type is one of creating the target network, deleting the target network, or modifying a network attribute of the target network.

In a possible implementation, the operation type further includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the transceiver unit is further configured to receive a response message sent by the core network device, where the response message indicates a result of operating the life cycle of the target network.

In a possible implementation, the target network is a user service function entity or another network function that provides a service for a user.

According to a fifth aspect, this application provides another communication apparatus. The apparatus may be a core network device, or may be a chip, a chip system, a processor, or the like that supports a core network device in implementing the foregoing method, or may be a logical module, a unit, or software that can implement all or some functions of a core network. The communication apparatus may alternatively be a chip system. The communication apparatus includes: a transceiver unit, configured to receive a request message from a terminal device, where the request message is used to operate a life cycle of a target network; and the request message is control plane signaling or user plane signaling between the terminal device and the core network device; and a processing unit, configured to operate, based on the request message, the life cycle that is of the target network and that is managed by the core network device.

In a possible implementation, the request message includes information about an operation type, and the operation type is one of creating the target network, deleting the target network, or modifying a network attribute of the target network.

In a possible implementation, the operation type further includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the processing unit is further configured to perform operation authentication based on the request message. When a result of the operation authentication indicates a success, the processing unit operates the life cycle of the target network. Alternatively, when a result of the operation authentication indicates a failure, the processing unit does not operate the life cycle of the target network.

In a possible implementation, that the processing unit performs operation authentication based on the request message includes one or more of the following: authenticating a status of the target network based on the operation type; or authenticating operation permission of the operation type.

In a possible implementation, if the operation type matches the status of the target network, the processing unit successfully authenticates the status of the target network; or if the operation type does not match the status of the target network, the processing unit fails to authenticate the status of the target network.

In a possible implementation, the status of the target network includes an existent state or a non-existent state, and that the operation type matches the status of the target network includes: when the operation type is creating the target network, the status of the target network is the non-existent state; when the operation type is deleting the target network, the status of the target network is the existent state; or when the operation type is modifying the network attribute of the target network, the status of the target network is the existent state.

In a possible implementation, that the operation type does not match the status of the target network further includes: when the operation type is suspending the target network, the status of the target network is a non-existent or suspended state; or when the operation type is resuming the target network, the status of the target network is a non-existent or activated state.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the processing unit obtains user subscription information based on the user information; and authenticates the operation permission of the operation type based on the user subscription information and/or according to a local configuration policy.

In a possible implementation, the user subscription information includes one or more of an allowed operation action list, an allowed network identifier list, an allowed network capacity quota, the allowed service user list, or the configuration policy list.

In a possible implementation, when a result of the operation authentication indicates a success, the transceiver unit sends a first response message to the terminal device based on an operation result of operating the life cycle of the target network, where the first response message includes the status of the target network and the identifier of the target network. Alternatively, when a result of the operation authentication indicates a failure, the transceiver unit sends a second response message to the terminal device, where the second response message indicates that an operation result of operating the life cycle of the target network indicates a failure.

In a possible implementation, the target network is a user service function entity or another network function that provides a service for a user.

According to a sixth aspect, this application provides a communication apparatus. The communication apparatus may be the terminal device in the foregoing method embodiment, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiment.

According to a seventh aspect, this application provides a communication apparatus. The communication apparatus may be the core network device in the foregoing method embodiments, or may be a chip disposed in the core network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the core network device in the foregoing method embodiment.

According to an eighth aspect, this application provides a computer-readable storage medium. The computer-readable storage medium is configured to store computer-executable instructions, and when the computer-executable instructions are executed, the method performed by the terminal device in the method according to the first aspect or the second aspect is implemented; or the method performed by the core network device in the method according to the first aspect or the third aspect is implemented.

According to a ninth aspect, this application provides a computer program product including a computer program, where when the computer program is executed, the method performed by the terminal device in the method according to the first aspect or the second aspect is implemented; or the method performed by the core network device in the method according to the first aspect or the third aspect is implemented.

According to a tenth aspect, this application provides a communication system, where the communication system includes the communication apparatus according to the fourth aspect and the fifth aspect; or includes the communication apparatus according to the sixth aspect and the seventh aspect.

### BRIEF DESCRIPTION OF DRAWINGS

FIG. 1a is a schematic diagram of a network system architecture according to an embodiment of this application;
FIG. 1b is a schematic diagram of a structure of a core network according to an embodiment of this application;
FIG. 1c is a schematic diagram of another core network architecture according to an embodiment of this application;
FIG. 2 is a schematic diagram of a structure of a user-centric network according to an embodiment of this application;
FIG. 3 is a schematic interaction diagram of a network resource management method according to an embodiment of this application;
FIG. 4a is a schematic interaction diagram of creating a target network according to an embodiment of this application;
FIG. 4b is another schematic interaction diagram of creating a target network according to an embodiment of this application;
FIG. 5a is a schematic interaction diagram of deleting a target network according to an embodiment of this application;
FIG. 5b is another schematic interaction diagram of deleting a target network according to an embodiment of this application;
FIG. 6a is a schematic interaction diagram of modifying a network attribute of a target network according to an embodiment of this application;
FIG. 6b is another schematic interaction diagram of modifying a network attribute of a target network according to an embodiment of this application;
FIG. 7 is a schematic interaction diagram of another network resource management method according to an embodiment of this application;
FIG. 8 is a schematic interaction diagram of still another network resource management method according to an embodiment of this application;
FIG. 9 is a schematic diagram of a structure of a communication apparatus according to an embodiment of this application; and
FIG. 10 is a schematic diagram of a structure of another communication apparatus according to an embodiment of this application.

### DESCRIPTION OF EMBODIMENTS

The following further describes specific embodiments of this application in detail with reference to the accompanying drawings.

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system such as a 3rd generation partner project (3rd generation partner project, 3GPP) service-based network architecture (service-based architecture, SBA), or a communication system evolved after 5G such as a 6th generation (6th generation, 6G) communication system.

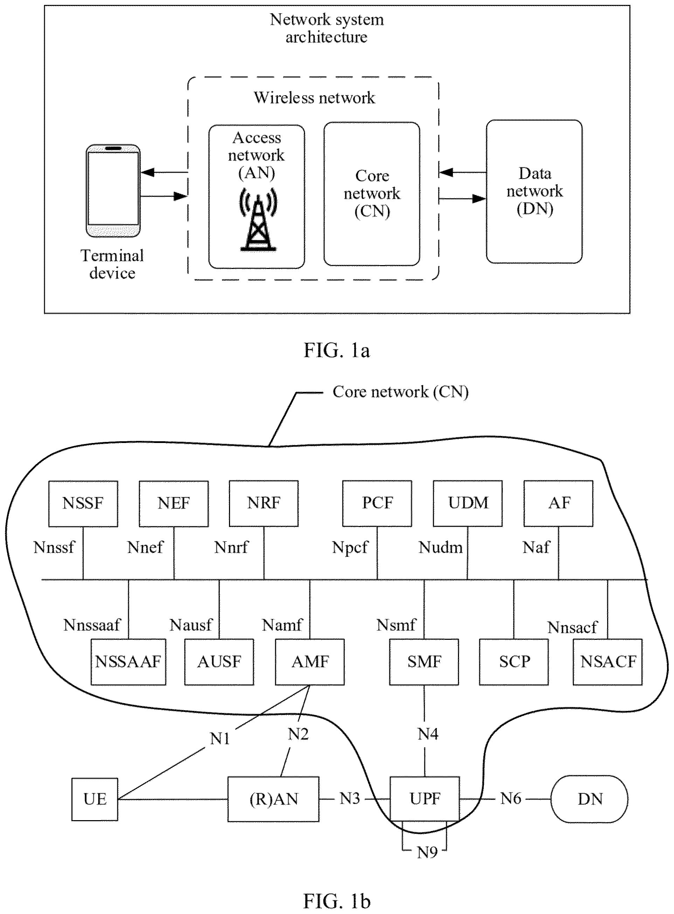

FIG. 1a is a schematic diagram of a network system architecture according to an embodiment of this application. As shown in FIG. 1a, a terminal device may access a wireless network, to obtain services of external networks (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to connect the terminal device to the wireless network, and the CN is configured to: manage the terminal device and provide a gateway for communicating with the DN. The following separately and specifically describes the terminal device, the RAN, the CN, and the DN in the system architecture in FIG. 1a.

### I. Terminal device

The terminal device includes a device that provides voice and/or data connectivity for a user. For example, the terminal device is a device having a wireless transceiver function, and may be deployed on land, including an indoor or outdoor device, a handheld device, a wearable or vehicle-mounted device; or may be deployed on a water surface (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### II. RAN

The RAN may include one or more RAN devices (or access network devices). An interface between an access network device and a terminal device may be a Uu interface (or referred to as an air interface). Certainly, in communication evolved after 5G, names of these interfaces may remain unchanged, or may be replaced with other names. This is not limited in this application.

The access network device is a node or a device that connects the terminal device to the wireless network. The access network device includes, for example, but is not limited to, a next-generation NodeB (next generation NodeB, gNB) in a 5G communication system, an evolved NodeB (evolved NodeB, eNB), a next-generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmission reception point (transmission reception point, TRP), a transmission point (transmission point, TP), a mobile switching center, or a device that functions as a base station in device-to-device (Device-to-Device, D2D), vehicle-to-everything (vehicle-to-everything, V2X), machine-to-machine (machine-to-machine, M2M) communication; or may include a central unit (central unit, CU) and a distributed unit (distributed unit, DU) in a cloud radio access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application.

### III. CN

The CN may include one or more CN devices (which may be understood as network element devices or functional network elements).

FIG. 1b is a schematic diagram of a structure of a CN according to this application. The CN in FIG. 1b is a schematic diagram of a CN in a 5G network architecture. The CN shown in FIG. 1b includes a plurality of CN devices: a network slice selection function (network slice selection function, NSSF), a network exposure function (network exposure function, NEF), a network repository function (network function repository function, NRF), a policy control function (policy control function, PCF), unified data management (unified data management, UDM), an application function (application function, AF), a network control function (network control function, NCF), a network slice-specific authentication and authorization function (network slice-specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and a network slice admission control function (Network Slice Admission Control Function, NSACF).

The AMF is a control plane function provided by an operator network, and is responsible for access control and mobility management for accessing the operator network by a terminal device, for example, including functions such as mobility status management, allocation of a temporary user identity, and user authentication and authorization.

The SMF is a control plane function provided by the operator network, and is configured to manage a protocol data unit (protocol data unit, PDU) session of the terminal device. The PDU session is a channel used to transmit a PDU, and the terminal device needs to transmit the PDU to a DN through the PDU session. The SMF is responsible for establishment, maintenance, deletion, and the like of the PDU session. The SMF includes functions related to a session, for example, session management (for example, session establishment, modification, and release, including tunnel maintenance between the UPF and the RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for the SMF. The policy may include a charging-related policy, a QoS-related policy, an authorization-related policy, and the like.

The UPF is a gateway provided by the operator and a gateway for communication between the operator network and the DN. The UPF includes user plane-related functions such as data packet routing and transmission, packet detection, quality of service (quality of service, QoS) processing, uplink packet detection, and downlink data packet storage.

The UDM is mainly configured to: manage subscription data and authentication data of a user, and perform authentication credit processing, user identifier processing, access authorization, registration/mobility management, subscription management, short message service management, and the like. In some embodiments, the UDM may further include a unified data repository (unified data repository, UDR). Alternatively, in some other embodiments, a 3GPP SBA in the 5G system may further include a UDR. The UDR is configured to: store and retrieve a PCF policy, store and retrieve structured data for exposure, store user information requested by the application function, and so on.

The CN devices may also be referred to as network elements or functional network elements. In a 5G communication system, functional network elements may be names of the functional network elements shown in FIG. 1b. In a communication system (for example, a 6G communication system) evolved after 5G, functional network elements may still be the names of the functional network elements shown in FIG. 1b, or may have other names. For example, in the 5G communication system, the policy control network element may be the PCF. In a communication system (for example, a 6G communication system) evolved after 5G, the policy control function may still be the PCF, or may have another name. This is not limited in this application.

In FIG. 1b, Npcf, Nudm, Naf, Namf, Nsmf, N1, N2, N3, N4, and N6 are interface sequence numbers. For meanings of these interface serial numbers, refer to meanings defined in related standard protocols. This is not limited herein.

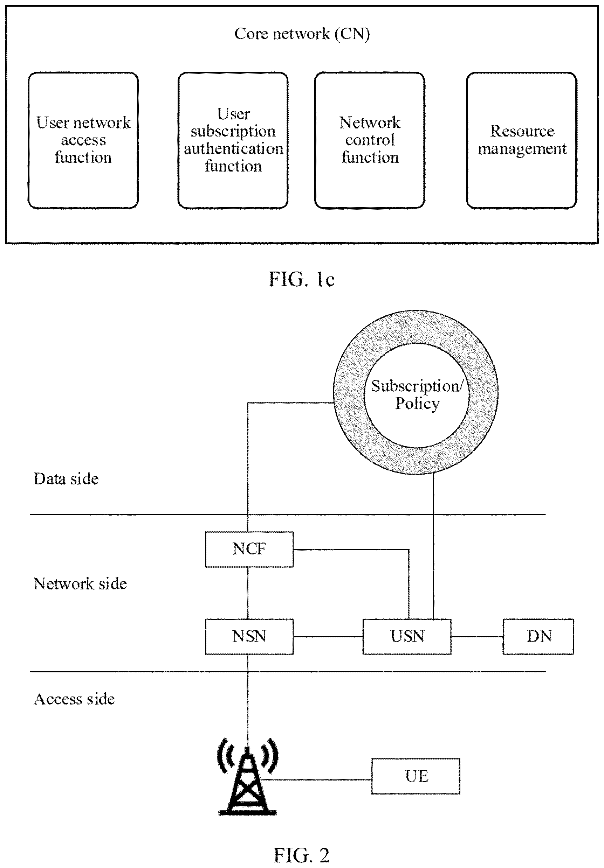

FIG. 1c is a schematic diagram of another CN architecture according to this application. In FIG. 1c, the CN includes a user network access function, a user subscription authentication function, a network control function, and a resource management function. The user network access function is configured to perform access control and mobility management on a terminal device. The user subscription authentication function is configured to: store and manage subscription information of a user. The network control function is configured to manage user network resources, for example, is responsible for operations of generation, change, elimination, and the like of a user network. The resource management function is configured to: manage a network resource, for example, allocate a resource to generate a network function instance required by the user network. The user network is used to provide a network service for one or more users, and may be understood as a core network element for a UE-dedicated service. For example, the user network may include one or more network elements, and may be a network element dedicated to the user, or may be a network element shared with another user. When the user network includes one network element, the user network may be the network element, and the network element may also be the user network. Specifically, the user network may be a network function that provides a network service for the terminal device, one virtual machine or a group of virtual machines, a container, a process, or another set of executable resources. The following uses a case in which the user network is a user service node (user service node, USN) as an example for description.

For example, the user network may be the USN, and the USN may be understood as integration of core network control functions, and is the core network element for the UE-dedicated service. For example, the USN may integrate functions of session management (session management, SM) and/or policy management (project management, PM). Alternatively, the USN may be understood as a digital twin function of UE in a core network, is a digital model for real behavior of the UE, for example, has functions of recording of service information used by the UE, artificial intelligence (artificial intelligence, AI) processing, and the like. Alternatively, the USN may be understood as similar to a cloud server (cloud computer). The UE may orchestrate, on the cloud server, resources provided by an operator, for example, QoS setting and bandwidth allocation of different services. It needs to be noted that the USN may be integrated into the 5G network architecture shown in FIG. 1b, or may be integrated into the CN architecture shown in FIG. 1c. In a possible implementation, the USN may be used as a newly added logical network element, or may be integrated into an existing network function in FIG. 1b or FIG. 1c as a logical function. For example, the USN may be integrated into an AMF and an SMF. The USN may alternatively exist in a form of a user-centric network (user-centric network, UCN) architecture. In this case, the UCN architecture may be understood as a user-centric network. Refer to a UCN network architecture shown in FIG. 2. The UCN network architecture shown in FIG. 2 includes a network service node (network service node, NSN) and a user service node (user service node, USN). Main functions of the NSN include authentication of accessed UE, USN creation, and life cycle management.

An NCF is configured to manage a USN resource in a UCN network architecture, for example, is responsible for operations of generation, change, elimination, and the like of the USN.

It should be understood that the NSN, the USN, and the NCF in this application are merely example names, and should not be considered as a specific limitation thereto. In other words, the NSN, the USN, and the NCF may use other names in other technical solutions except this application, or may be other communication devices having same functions. For example, the NSN may be an access control function, the NCF may be a network resource control or management function, and the USN may be a terminal digital twin function.

It needs to be stated as follows. 1. The CN structure shown in FIG. 1c is merely for ease of understanding of the CN, and only an example in which each functional network element is separately deployed in the CN is used. In some possible CN structures, functional network elements may be integrated and combined for deployment. For example, the network access function and the user subscription authentication function in FIG. 1c are integrated into a same functional network element, or the network access function and the network control function in FIG. 1c are integrated into a same functional network element. This is not specifically limited in this application. 2. A core network mentioned below in this application may be a functional network element in the core network, or may be integration of several functional network elements in the core network, or may be integration of all functional network elements in the core network. The core network may be the core network in the 5G communication system shown in FIG. 1b, or may be the core network shown in FIG. 1c, or may be another possible communication system (for example, a core network in an LTE communication system or a communication system evolved after 5G). 3. The foregoing network element or functions may be network elements in a hardware device, may be software functions run on dedicated hardware, or may be instantiated virtualization functions on a platform (for example, a cloud platform). Optionally, the network element or function may be implemented by one device, or may be jointly implemented by a plurality of devices, or may be a functional module in one device. This is not specifically limited in embodiments of this application.

### IV. DN

A DN, also be referred to as a packet data network (packet data network, PDN), is a network located outside an operator network. The operator network may access a plurality of DNs. Application servers corresponding to a plurality of services may be deployed in the DN, to provide a plurality of possible services for the terminal device.

Usually, a procedure in which a user modifies a user network may be briefly described as follows: The user interacts with an operator of a mobile network about a user requirement; and after understanding the user requirement, the operator modifies a configuration of the user network by using a BSS and an OSS, so that the modified user network meets the user requirement. However, it usually takes a long time to validate the user network that is modified by the user in this method, and efficiency is low.

This application provides a network resource management method. In the method, a user may use control plane signaling (or user plane signaling) between a terminal device and a core network to carry a request message for operating a target network, to modify the target network that provides a network service for the user. In comparison with a manner in which the user modifies the target network by using an operator, a period for modification of the target network to take effect is shortened, thereby improving efficiency.

The following further describes, with reference to the accompanying drawings, a network resource management method and a communication apparatus provided in this application.

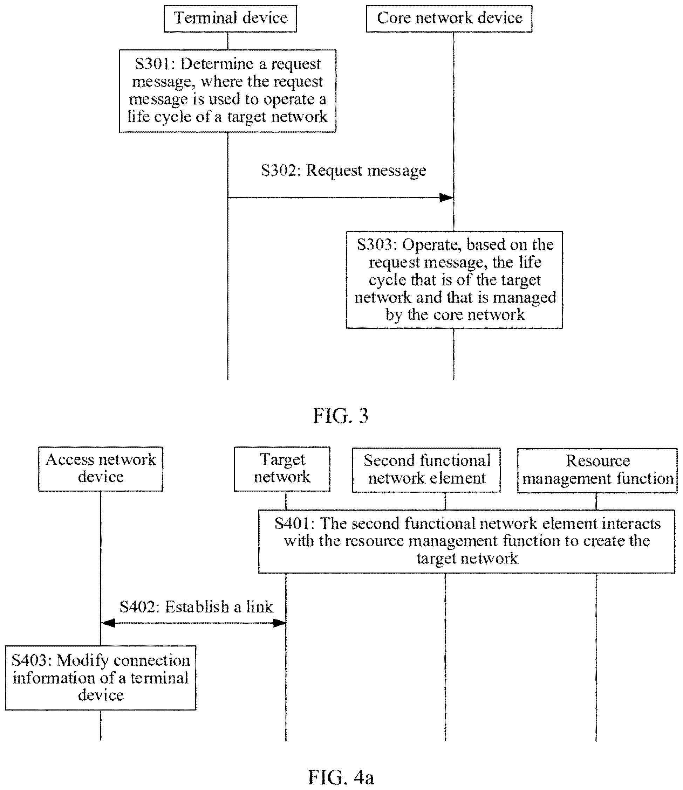

FIG. 3 is a schematic flowchart of a network resource management method according to an embodiment of this application. As shown in FIG. 3, the network resource management method may be executed by a core network device or a chip in a core network device, or may be executed by a terminal device or a chip in a terminal device. FIG. 3 is described by using an example in which the core network device and the terminal device are entities for executing the method.

S301: The terminal device determines a request message, where the request message is used to operate a life cycle of a target network.

The terminal device determines (or generates), based on a user requirement, the request message for requesting to operate the life cycle of the target network. The operating a life cycle of a target network includes: creating the target network and deleting the target network. In other words, the terminal device may determine the request message used to create the target network, or determine the request message used to delete the target network.

In a possible implementation, the target network may have a plurality of statuses, including: an existent state and a non-existent state. It should be understood that, that the status of the target network is the existent state means that the target network exists, and that the status of the target network is the non-existent state means that the target network does not exist.

In a possible implementation, that the status of the target network is the existent state includes: a running state of the target network is a suspended state (or referred to as a standby state, a to-be-activated state, a deactivated state, or the like) or a running state of the target network is an activated state. In this case, the operating a life cycle of a target network may further include modifying the running state of the target network. The modifying the running state of the target network includes: suspending the target network, for example, changing the running state of the target network from the activated state to the suspended state; or resuming (or activating) the target network, for example, changing the running state of the target network from the suspended state to the activated state. In a possible implementation, the modifying the running state of the target network may further include: when the running state of the target network is an abnormal (or faulty) state, modifying the running state of the target network to a normal running state.

In a possible implementation, the target network further includes a plurality of network attributes, including but not limited to one or more of a capacity (namely, a capacity-related parameter), a capability (namely, a network capability-related parameter), a configuration policy, or a service user list. In this case, the operating a life cycle of a target network may further include: modifying the network attribute of the target network.

It needs to be stated that the target network mentioned in this application is a network function (network function, NF) configured to provide a network service for the terminal device, one virtual machine or a group of virtual machines, a container, a process, or another set of executable resources. The network service includes but is not limited to one or more of data downloading, data access, and a call. In other words, the target network may be a user service function entity or another network function that provides a service for a user. For example, the target network may be a USN network element or a USN function entity.

In a possible implementation, the request message includes information about an operation type, and the operation type is one of creating the target network, deleting the target network, suspending the target network, resuming the target network, or modifying the network attribute of the target network.

Creating the target network is generating (or establishing), from scratch, the target network that provides the network service for a terminal. Deleting the target network is deleting a connection relationship (for example, a connection relationship between the target network and an access network device) of the target network and deleting a resource (for example, a running resource) occupied by the target network. The suspending the target network is setting the status of the target network to the suspended state (or referred to as the standby state, the to-be-activated state, the deactivated state, or the like). Resuming the target network is changing the status of the target network from the suspended state to the activated state. Modifying the network attribute of the target network may be understood as one or more of modifying the capacity of the target network (that is, modifying the capacity-related parameter), modifying the capability of the target network (modifying the network capability-related parameter), modifying the configuration policy of the target network, or modifying the service user list of the target network.

In a possible implementation, the information about the operation type may be an index value, and there is a mapping relationship between the index value and the operation type. The mapping relationship may be specified in a protocol, preconfigured, or agreed upon by the terminal and a core network. For example, a specific implementation of the information about the operation type may be as follows: The request message includes a field 1, and the field 1 indicates the operation type. For example, for a mapping relationship between a value of the field 1 and the operation type, refer to Table 1.

**Table 1**

| Value of a field 1 | Operation type |
|---|---|
| 0 | Creating a target network |
| 1 | Deleting a target network |
| 2 | Suspending a target network |
| 3 | Resuming a target network |
| 4 | Modifying a network attribute of a target network |

In this case, if the user determines that a requirement of the user is to suspend the target network, the terminal device determines that the value of the field 1 in the request message is 2. It needs to be noted that a representation form of the value of the field 1 in this example is merely an example, and should not be considered as a specific limitation on this application. The value of the field 1 may alternatively be represented by using a bit (bit). For example, the field 1 includes three bits (bits). In this case, when the value of the field 1 is 000, it indicates that the operation type is creating the target network; when the value of the field 1 is 001, it indicates that the operation type is modifying the target network; when the value of the field 1 is 010, it indicates that the operation type is suspending the target network; when the value of the field 1 is 011, it indicates that the operation type is resuming the target network; or when the value of the field 1 is 100, the operation type is modifying the network attribute of the target network.

In a possible implementation, the request message further includes one or more of user information of the terminal device, an operation parameter corresponding to the operation type, or information about the target network.

The user information includes one or more of information indicating a permanent identifier of the user (for example, a subscription permanent identifier (subscription permanent identifier, SUPI), an international mobile subscriber identity (international mobile subscriber identification number, IMSI), or a mobile subscriber international ISDN number (mobile subscriber international ISDN number, MSISDN)), a user group identifier, a temporary user identifier (for example, a globally unique temporary identifier (globally unique temporary identity, GUTI)), or a device identifier (for example, a permanent equipment identifier (permanent equipment identifier, PEI), or an international mobile equipment identifier (international mobile equipment identity, IMEI)). The operation parameter corresponding to the operation type may indicate a specific operation. For example, when the request message is for requesting to create the target network, the operation parameter carried in the request message indicates to create a specific target network. When the request message is to modify the network attribute of the target network, the operation parameter carried in the request message indicates to modify one (or several) specific network attribute of the target network. The information about the target network includes one or more of an identifier, a capacity value, a capability list, the service user list, or the configuration policy of the target network.

For example, if a user 11 creates a target network with a capacity value a1 and a capability value p1, a request message determined by a terminal device of the user 11 may include an identifier of the user 11, an operation type being creating the network, and an operation parameter including the capacity value a1 and the capability value p1.

For example, a service user list of a target network N1 includes the user 11, a user 12, and a user 21. If the user 11 (which may be understood as a user having management permission for the target network N1) intends to move the user 21 out of the service user list of the target network N1, the terminal device of the user 11 determines a request message for operating the target network N1. The request message may include the identifier of the user 11, an identifier of the target network N1, an operation type being modifying a network attribute of the target network, and an operation parameter being deleting an identifier of the user 21 from the service user list of the target network N1.

S302: The terminal device sends the request message to the core network, and correspondingly, the core network receives the request message.

The request message is control plane signaling or user plane signaling between the terminal device and the core network. In other words, the terminal device sends the request message to the core network by using the control plane signaling or the user plane signaling between the terminal device and the core network.

In a possible implementation, the control plane signaling may be non-access stratum (non-access stratum, NAS) signaling.

In a possible implementation, the user plane signaling may be a message based on a general packet radio service tunneling protocol (general packet radio service tunneling protocol, GTP)-user plane (namely, GTP-U). In a possible implementation, the core network device that performs step S302 is a first functional network element, and the terminal device sends the request message to the first functional network element. The first functional network element is configured to access the terminal device to the core network, that is, the first functional network element has a user network access function. For example, the first functional network element may be the AMF network element in FIG. 1b, the NSN network element in FIG. 2, or the like. The first functional network element may also be referred to as an access management network element or a network service network element.

S303: The core network operates, based on the request message, the life cycle that is of the target network and that is managed by the core network.

In other words, based on the information about the operation type in the request message, the core network creates the target network, deletes the target network, modifies the running state of the target network (including suspending the target network or resuming the target network), or modifies the network attribute of the target network.

In a possible implementation, the core network manages one or more user networks. When the operation type in the request message is any one of deleting the target network, modifying the running state of the target network (including suspending the target network or resuming the target network), or modifying the network attribute of the target network, the core network determines the target network from a plurality of networks based on the request message, and operates a life cycle of the target network.

In a possible implementation, the core network device that performs step S303 is a second functional network element, and the second functional network element is configured to operate the life cycle of the target network. For example, the second functional network element may be an NCF network element. The second functional network element may also be referred to as a network control network element.

It should be understood that the second functional network element may be co-deployed with the first functional network element (that is, an entity has both a function of the first functional network element and a function of the second functional network element), or the second functional network element may be separately deployed from the first functional network element. When the second functional network element is separately deployed from the first functional network element, there is a communication connection between the first functional network element and the second functional network element (that is, it may be understood that the first functional network element may communicate with the second functional network element). After the first functional network element receives the request message (for ease of differentiation, where the request message in S302 is referred to as a first request message below) from the terminal device in S302, the first functional network element may forward the first request message to the second functional network element, so that the second functional network element may operate the life cycle of the target network based on the request message in S303. Alternatively, after the first functional network element receives a first request message from the terminal device in S302, the first functional network element may send a second request message (where content included in the second request message may be the same as content included in the first request message) to the second functional network element based on the first request message, so that the second functional network element operates the life cycle of the target network based on the second request message.

In a possible implementation, when the second functional network element is separately deployed from the first functional network element, to improve communication system security, the second functional network element may perform identity authentication on the first functional network element; and after the identity authentication on the first functional network element succeeds, the second functional network element operates the life cycle of the target network.

In other words, after the second functional network element receives the second request message from the first functional network element, the second functional network element performs identity verification on the first functional network element, where verification content of the second functional network element includes but is not limited to one or more of the following content: verifying whether the first functional network element actually exists; verifying whether the first functional network element has permission of sending the second request message (that is, whether the first functional network element has permission of requesting the second functional network element to operate the life cycle of the target network); or verifying whether the first functional network element is valid. After the identity authentication performed by the second functional network element on the first functional network element succeeds, the second functional network element operates the life cycle of the target network based on the second request message.

For ease of understanding of the technical solutions of this application, the following uses an example in which the second functional network element is separately deployed from the first functional network element to describe an example of how to create the target network, delete the target network, modify the running state of the target network, or modify the network attribute of the target network.

### 1. Create the target network.

A connection between the target network and the access network device may be a direct connection (referred to as a direct connection for short below), or may be an indirect connection (referred to as an indirect connection for short below). It should be understood that the target network is in direct connection to the access network device, that is, the access network device may directly communicate with the target network. In other words, after the access network device receives a service request message (where the service request message is for requesting the target network to provide a network service) from the terminal device, the access network device may directly forward the service request message to the target network, so that the target network provides the corresponding network service. The target network is in indirect connection to the access network device, that is, the access network device indirectly communicates with the target network by using the first functional network element. In other words, after receiving the service request message from the terminal device, the access network device sends the service request message to the first functional network element, and the first functional network element forwards the service request message to the target network, so that the target network provides the corresponding network service.

It can be learned that, when the target network is in direct connection to the access network device, signaling transmission overheads can be reduced. When the target network is in indirect connection to the access network device, the access network device cannot directly contact the target network, thereby improving security of the target network.

The following specifically describes a process of creating the target network based on a case in which the target network is in direct connection to the access network device and a case in which the target network is in indirect connection to the access network device.

In the case in which the target network is in direct connection to the access network device, refer to FIG. 4a. FIG. 4a is a schematic flowchart of creating a target network according to this application.

S401: A second functional network element interacts with a resource management function to create the target network.

The second functional network element interacts with the resource management function, applies for an available running resource, and instantiates a running entity. The running entity may be a newly instantiated virtual machine, a newly instantiated container, or a new process, a thread, or another running execution entity that runs on an existing virtual machine or container. Further, the second functional network element creates the target network based on a request message from a terminal device.

The resource management function is configured to: manage a network resource, for example, allocate a resource to generate a network function instance required by a user network. In a possibility, the resource management function may be a management and orchestration (management and orchestration, MANO) network element, a container (docker) management network element, a docker engine, or another resource management function.

In a possible scenario, a core network may further include a third functional network element. The third functional network element is configured to store network configuration data, and the network configuration data includes a network configuration parameter and/or network operation policy data. The network configuration parameter includes one or more of a parameter (for example, one or more of a data packet loss rate, a latency, bandwidth, or a network speed) required for network running, a script required for network running, or an environment variable. The network operation policy data includes one or more of a QoS policy, a charging policy, or a user access control policy. In a possible implementation, the network configuration data in the third functional network element is associated with a user identifier, or the network configuration data in the third functional network element is associated with an identifier of the network, or each piece of configuration data in the third functional network element is associated with an index value.

If the network configuration data in the third functional network element is associated with the user identifier, the request message carries the user identifier and an operation type (where the operation type herein is creating the target network), the second functional network element interacts with the resource management function based on the user identifier to create the target network, and the second functional network element (or the target network) obtains, from the third functional network element based on the user identifier, the network configuration data corresponding to the target network. Further, the second functional network element configures the target network based on the network configuration data.

If the network configuration data in the third functional network element is associated with the identifier of the network, the request message carries the user identifier and an operation type (where the operation type herein is creating the target network). Further, the second functional network element interacts with the resource management function based on the user identifier, to create the target network. The target network (or the second functional network element) obtains, from the third functional network element based on the identifier of the target network, the network configuration data corresponding to the identifier of the target network. The target network (or the second functional network element) configures the target network based on the network configuration data.

If each piece of configuration data in the third functional network element is associated with the index value, the request message carries the user identifier, an operation type (where the operation type herein is creating the target network), and an operation-related parameter (herein, a specific parameter for creating the target network, for example, a capacity value, a capability, or a service user list of the target network). Further, the second functional network element interacts with the resource management function based on the user identifier, to create the target network. The target network (or the second functional network element) determines a target index value based on the operation parameter, and obtains, from the third functional network element based on the target index value, the network configuration data corresponding to the identifier of the target network. The target network (or the second functional network element) configures the target network based on the network configuration data.

S402: The target network interacts with an access network device to establish a communication connection and a user context connection.

Specifically, after creating the target network, the second functional network element sends information about the access network device to the target network, and notifies to update user context information. The information about the access network device is used to address the access network device, and the user context information is used to establish the user context connection. Further, the target network establishes the communication connection to the access network device based on the information about the access network device, and establishes the user context connection based on the user context information. The access network device is a device that connects the terminal device to the target network. The information about the access network device is used to address the access network device. For example, the access network device includes an access network device identifier and/or address information of the access network device.

Alternatively, after creating the target network, the second functional network element sends information about the target network to the access network device, and notifies to update the user context information. The information about the target network is used to address the target network, and the user context information is used to establish the user context connection. Further, the access network device establishes the communication connection to the target network based on the information about the target network, and establishes the user context connection based on the user context information. The access network device is a device that connects the terminal device to the target network. The information about the target network is used to address the target network. For example, the information about the target network includes an identifier of the target network and/or address information of the target network.

It needs to be noted that the communication connection includes one or more of underlying connections established and completed according to a hypertext transfer protocol (hypertext transfer protocol, HTTP), a transmission control protocol (transmission control protocol, TCP), a stream control transmission protocol (stream control transmission protocol, SCTP), or another protocol. The user context information includes a user state, user attribute information, and user-related communication connection information.

S403: The access network device modifies connection information of the terminal device.

In other words, after establishing the communication connection and the user context connection to the target network, the access network device modifies a sending path (or referred to as a routing path) of a message from the terminal device, so that the access network device subsequently forwards a network service request message (for example, a PDU session establishment request message) from the terminal device to the target network.

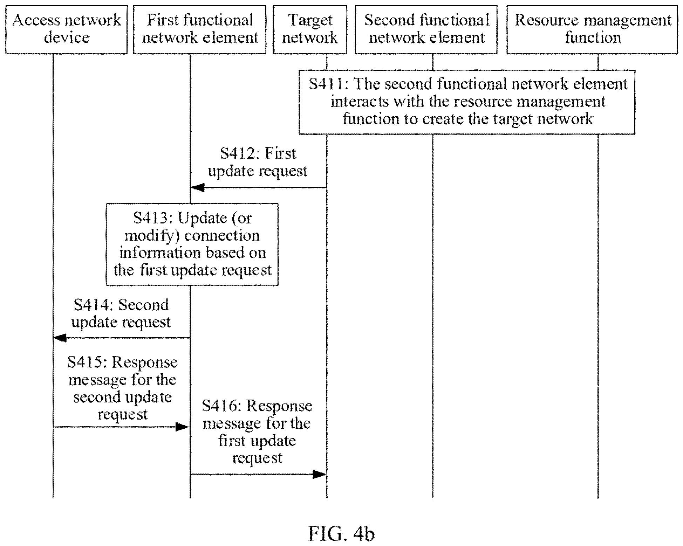

In the case in which the target network is in indirect connection to the access network device, that is, the target network and the access network device indirectly interact with each other by using a first functional network element, refer to FIG. 4b. FIG. 4b is another schematic flowchart of creating a target network according to this application.

S411: A second functional network element interacts with a resource management function to create the target network.

For a specific implementation of S411, refer to the foregoing descriptions of the specific implementation of S401. Repeated parts are not described herein again.

S412: The target network sends a first update request to the first functional network element, and correspondingly, the first functional network element receives the first update request from the target network.

The first update request is for requesting the first functional network element to update (or modify) access control of the target network. The first update request carries information about the target network, and notifies to update user context information. The information about the target network is used to address the target network. For example, the information about the target network includes but is not limited to an identifier of the target network or address information of the target network. The user context information is used to establish a user context connection.

S413: The first functional network element updates (or modifies) connection information based on the first update request.

In other words, the first functional network element stores the information about the target network, and establishes a communication connection and the user context connection, so that after receiving a request message for requesting the target network to provide a network service (or a request message for accessing the target network), the first functional network element forwards, to the target network, the received request message for requesting the target network to provide the network service.

S414: The first functional network element sends a second update request to the access network device, and correspondingly, the access network device receives the second update request from the first functional network element.

In other words, the second update request may enable the access network device to establish a communication connection and a user context connection to the first functional network element that are related to the target network, that is, both the communication connection and the user context connection are associated with the target network. The second update request is for requesting the access network device to update (or modify) the access control of the target network. The second update request carries the information about the target network, and the information about the target network is used to address the target network. For example, the information about the target network includes but is not limited to the identifier of the target network or the address information of the target network.

S415: The access network device sends a response message for the second update request to the first functional network element, and correspondingly, the first functional network element receives the response message for the second update request from the access network device. The response message carries an operation result of the access network device based on the second update request.

The access network device performs a corresponding operation based on the second update request: The access network device establishes the communication connection and the user context connection to the first functional network element that are related to the target network, that is, the communication connection and the user context connection are associated with the target network. Further, the access network device sends the response message for the second update request to the first functional network element based on the operation result in the second update request.

S416: The first functional network element sends a response message for the first update request to the target network, and correspondingly, the target network receives the response message for the first update request from the first functional network element.

The response message for the first update request indicates an operation result of the first functional network element based on the first update request and the operation result of the access network device based on the second update request. In other words, when the operation result of the first functional network element based on the first update request indicates a success, and the operation result of the access network device based on the second update request indicates a success, the operation result, in the response message, sent by the first functional network element to the target network and for the first update request indicates a success. When the operation result of the first functional network element based on the first update request indicates a failure, or the operation result of the access network device based on the second update request indicates a failure, the operation result, in the response message, sent by the first functional network element to the target network and for the first update request indicates a failure.

### 2. Delete the target network.

The following specifically describes a process of deleting the target network based on a case in which the target network is in direct connection (direct connection for short below) to the access network device and a case in which the target network is in indirect connection to the access network device.

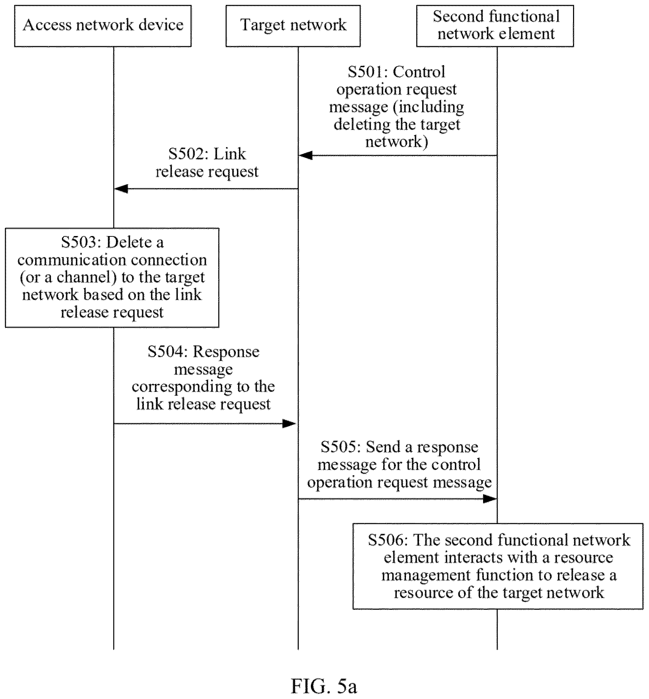

In the case in which the target network is in direct connection to the access network device, refer to FIG. 5a. FIG. 5a is a schematic flowchart of deleting a target network according to this application.

S501: A second functional network element sends a control operation request message to the target network, and correspondingly, the target network receives the control operation request message from the second functional network element, where the control operation request message includes an operation type (herein, deleting the target network).

The second functional network element receives a request message from a terminal device, where the request message is used to delete the target network. In this case, the second functional network element sends the control operation request message to the target network, and the control operation request message indicates the target network to release a link.

S502: The target network sends a link release request to the access network device, and correspondingly, the access network device receives the link release request from the target network.

The target network deletes a user context connection to the access network device based on the control operation request message sent by the second functional network element, and sends a link release request to the access network device, where the link release request indicates (or notifies) the access network device to delete the user context connection to the target network.

The link release request includes information about the target network, and the information about the target network is used to address the target network. The information about the target network includes but is not limited to an identifier of the target network and/or address information of the target network.

S503: The access network device deletes the user context connection to the target network based on the link release request.

The access network device may smoothly delete the user context connection to the target network based on the link release request. A process of smoothly deleting the user context connection may be described as follows: The access network device sends a notification message to the terminal device, where the notification message notifies that the terminal device served by the target network is offline. After all terminal devices served by the target network service are offline, the access network device deletes the user context connection to the target network. In this method, the link is released after all users served by the target network are offline, so that user experience can be improved.

Alternatively, the access network device may non-smoothly delete the user context connection to the target network based on the link release request. In other words, after the access network device receives the link release request, regardless of whether the terminal device served by the target network is offline, the access network device directly deletes the user context connection to the target network. In this method, efficiency of releasing the link by the access network device can be improved.

S504: The access network device sends, to the target network, a response message corresponding to the link release request, and correspondingly, the target network receives the response message that corresponds to the link release request and that is sent by the access network device. The response message carries an operation result of the access network device based on the link release request.

It needs to be understood that releasing the link mentioned in this application refers to deleting the context connection between the two devices, and the response message is transmitted through a signaling channel. Therefore, after the link is released between the two devices, subsequent transmission of the response message is not affected (that is, the response message may still be transmitted between the two devices through the signaling channel (or a communication connection)). For example, after the access network device releases the user context connection between the access network device and the target network based on the link release request in S503, in S504, the access network device may send the response message for a second link release request to the first functional network element through the signaling channel (the communication connection).

S505: The target network sends a response message for the control operation request message to the second functional network element, and correspondingly, the second functional network element receives the response message for the second link release request from the target network. The response message carries a result of a link release operation of the user context connection between the target network and the access network device.

S506: The second functional network element interacts with a resource management function to release a resource of the target network.

That the second functional network element releases the resource of the target network, and completes the release of the resource of the target network may be understood that all communication connections (including a communication connection between the target network and the second functional network element and the communication connection between the target network and the access network device) related to the target network are released. Deleting the communication connection may be one or more of deleting underlying connections completed according to an HTTP, a TCP, an SCTP, or another protocol.

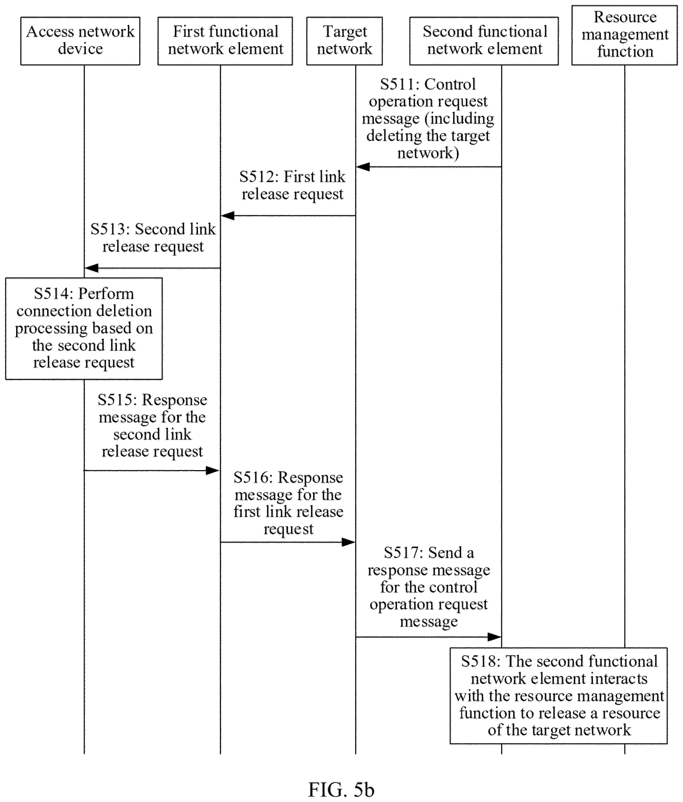

In the case in which the target network is in indirect connection to the access network device, refer to FIG. 5b. FIG. 5b is another schematic flowchart of deleting a target network according to this application.

S511: A second functional network element sends a control operation request message to the target network, and correspondingly, the target network receives the control operation request message from the second functional network element. The control operation request message includes an operation type (herein, deleting the target network).

S512: The target network sends a first link release request to a first functional network element, and correspondingly, the first functional network element receives the first link release request from the target network.

The target network sends the first link release request to the first functional network element based on the control operation request message sent by the second functional network element, where the first link release request indicates (or notifies) the first functional network element to delete a user context connection to the target network. The link release request includes information about the target network, and the information about the target network is used to address the target network. The information about the target network includes but is not limited to an identifier of the target network and/or address information of the target network.

S513: The first functional network element sends a second link release request to the access network device, and correspondingly, the access network device receives the second link release request from the first functional network element.

The first functional network element sends the second link release request to the access network device based on the first link release request, where the second link release request indicates (or notifies) the access network device to delete a user context connection that is to the first functional network element and that is related to the target network. The link release request includes the information about the target network, and the information about the target network is used to address the target network. The information about the target network includes but is not limited to the identifier of the target network and/or the address information of the target network.

S514: The access network device performs connection deletion processing based on the second link release request.

Specifically, the access network device may smoothly perform connection deletion processing based on the second link release request. Alternatively, the access network device may non-smoothly perform connection deletion processing based on the second link release request.

S515: The access network device sends a response message for the second link release request to the first functional network element, and correspondingly, the first functional network element receives the response message for the second link release request from the access network device. The response message carries an operation result of the access network device based on the second link release request.

S516: The first functional network element sends a response message for the first link release request to the target network, and correspondingly, the target network receives the response message for the second link release request from the first functional network element. The response message carries an operation result of the first functional network element based on the first link release request, or further includes the operation result of the access network device based on the second link release request.

S517: The target network sends a response message for the control operation request message to the second functional network element, and correspondingly, the second functional network element receives the response message for the second link release request from the target network. The response message carries an operation result of the first functional network element based on the first link release request, or further includes the operation result of the access network device based on the second link release request.

S518: The second functional network element interacts with a resource management function to release a resource of the target network.

That the second functional network element releases the resource of the target network, and completes the release of the resource of the target network may be understood that all communication connections (including a communication connection between the target network and the second functional network element and a communication connection between the target network and the first functional network element) related to the target network are released.

3. Modify the target network (modify the network attribute of the target network or modify the running state of the target network, including suspending the target network or resuming the target network).

The following specifically describes a process of suspending the target network based on a case in which a second functional network element directly controls a first functional network element and a case in which the second functional network element indirectly controls the first functional network element.

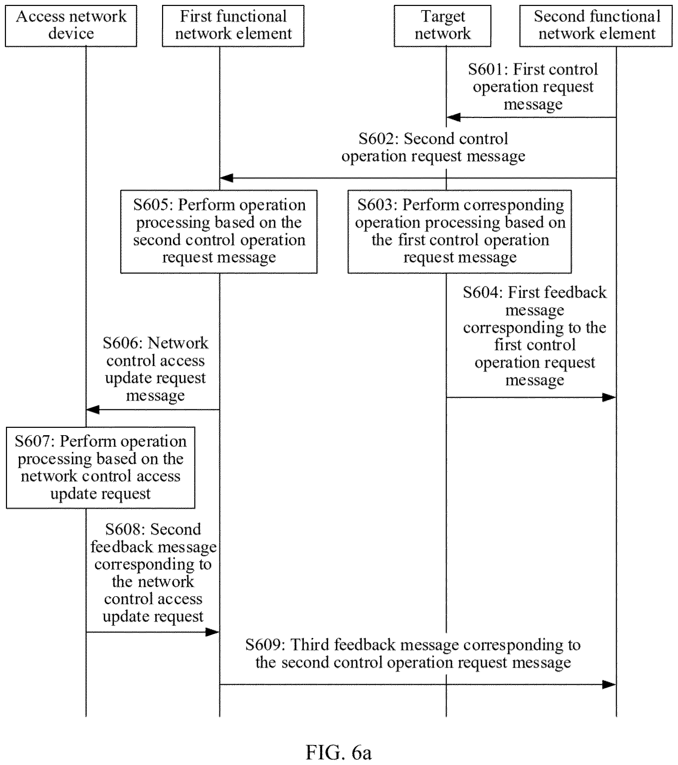

In the case in which the second functional network element directly controls the first functional network element, refer to FIG. 6a. FIG. 6a is a schematic flowchart of modifying a target network (modifying a running state of a target network or modifying a network attribute of a target network) according to this application.

S601: The second functional network element sends a first control operation request message to the target network, and correspondingly, the target network receives the first control operation request message from the second functional network element. The first control operation request message includes an operation type.

In FIG. 6a, the operation type is one of modifying the running state of the target network (that is, suspending the target network or resuming the target network) or modifying the network attribute of the target network. The first control operation request message is for requesting the target network to perform operation processing corresponding to the operation type, that is, one of modifying the running state of the target network (that is, suspending the target network or resuming the target network) or modifying the network attribute of the target network. In this case, the first control operation request message may further include identifier information of the target network.

In a possible implementation, modifying the network attribute of the target network includes modifying one or more of the following: 1. Modify a network capability of the target network, for example, enable or disable a device capability or a service (service) corresponding to the target network, where the service may be a service provided by each NF defined in 3GPP, and in this case, NRF registration and update are triggered after the service provided by the NF is modified. 2. Modify a network capacity of the target network, for example, increase a capacity value of the target network (perform capacity expansion processing), decrease a capacity value of the target network (perform capacity reduction processing), or change a capacity value of the target network to a specified value or level, to implement capacity expansion or capacity reduction of the target network. 3. Modify a user list of the target network, for example, add user information to or delete user information from the user list of the target network, where the user information includes one or more of a subscription permanent identifier (for example, an IMSI/SUPI/MSISDN), a user group identifier, a temporary user identifier (for example, a GUTI), or a device identifier (for example, a PEI/an IME).

In a possible implementation, when the first control operation request message is used to modify the network attribute of the target network, the first control operation request message may further include an operation parameter.

S602: The second functional network element sends a second control operation request message to the first functional network element, and correspondingly, the first functional network element receives the second control operation request message from the second functional network element. The second control operation request message includes an operation type.

The second control operation request message is for requesting the first functional network element to perform operation processing, on information about the target network, corresponding to the operation type, that is, one of suspending the target network, resuming the target network, or modifying the network attribute of the target network.

In this case, the second control operation request message may further include identifier information of the target network.

In a possible implementation, when the second control operation request message is used to modify the network attribute of the target network, the second control operation request message may further include an operation parameter.

It needs to be learned that an execution sequence of S601 and S602 herein is merely an example, and should not be considered as a specific limitation on this application. In other words, in an actual application process, S601 and S602 may be performed simultaneously, or S602 may be performed before S601, or S601 may be performed before S602.

S603: The target network performs corresponding operation processing based on the operation type in the first control operation request message.

The suspending, by the target network, the target network specifically includes one or more of the following: recording a working state of a user context to prohibit subsequent signaling of a user, ending and reporting statistical information and call detail record data of a user, or detaching, through signaling, a user immediately (or triggered by a timer).

The resuming (or activating), by the target network, the target network specifically includes one or more of the following: recording a working state of a user context to resume subsequent signaling of a user, resuming statistical information and call detail record data of a user, or allowing subsequent signaling of a user.

The modifying, by the target network, the network attribute of the target network specifically includes: The target network modifies the network attribute (including one or more of the network capability, the network capacity, or the user list) of the target network based on the operation parameter in the first control operation request message.

S604: The target network sends, to the second functional network element, a feedback message corresponding to the first control operation request message, and correspondingly, the second functional network element receives, from the target network, the first feedback message corresponding to the first control operation request message.

After the target network performs corresponding operation processing based on the first control operation request message, the target network sends a first feedback message to the second functional network element based on this operation result. The first feedback message includes first operation result information, and the first operation result information indicates the operation result of performing an operation based on the first control operation request message by the target network. When the first operation result information indicates an operation failure, the first operation result information may include a first failure cause value, and the first failure cause value indicates a specific cause why this operation performed by the target network fails.

In a possible implementation, the first feedback message includes one or more of an identifier of the target network, a state (including an activated state or a suspended state) of the target network after the operation processing, or network attribute information of the target network.

S605: The first functional network element performs operation processing based on the second control operation request message.

The first functional network element performs the corresponding operation processing based on specific content of the second control operation request message sent by the second functional network element.

In an example, when the operation type in the second control operation request message is suspending the target network, the suspending, by the first functional network element, the target network in an information list maintained by the first functional network element, that is, updating (or modifying) the information about the target network to corresponding information during the suspension of the target network specifically includes one or more of the following: recording a working status of a user context to prohibit subsequent signaling of a user, ending and reporting statistical information and call detail record data of a user, or detaching (detach) or deregistering (deregister), through signaling, a user immediately (or triggered by a timer).

In another example, when the operation type in the second control operation request message is resuming the target network, the resuming, by the first functional network element, the target network in an information list maintained by the first functional network element, that is, updating (or modifying) the information about the target network to corresponding information during the activation of the target network specifically includes one or more of the following: recording a working status of a user context to resume subsequent signaling of a user, resuming statistical information and call detail record data of a user, or allowing subsequent signaling of a user.

In still another example, when the operation type in the second control operation request message is modifying the network attribute of the target network, the first functional network element modifies, based on the second control operation request message, the network attribute information of the target network in an information list maintained by the first functional network element, that is, it may be understood that the first functional network element modifies the network attribute information of the target network based on the operation parameter in the second control operation request message.

S606: The first functional network element sends a network control access update request message to an access network device, and correspondingly, the access network device receives the network control access update request message from the first functional network element. The network control access update request message includes an operation type.

When the operation type is suspending the target network, the network control access update request message is for requesting the access network device to perform corresponding operation processing on the information about the target network, that is, to update (or modify) the information about the target network to the corresponding information during the suspension of the target network. In this case, the update request may further include the identifier information of the target network.

When the operation type is resuming (or activating) the target network, the network control access update request message is for requesting the access network device to perform corresponding operation processing on the information about the target network, that is, to update (or modify) the information about the target network to the corresponding information during the activation of the target network. In this case, the update request may further include the identifier information of the target network.

When the operation type is modifying the network attribute of the target network, the network control access update request message is for requesting the access network device to modify the network attribute of the target network maintained by the access network device. In this case, the second control operation request message may further include the identifier information of the target network and the operation parameter.

S607: The access network device performs operation processing based on the network control access update request.

The access network device performs the corresponding operation processing based on specific content of the network control access update request.

In an example, when the operation type in the network control access update request is suspending the target network, the updating (or modifying), by the access network device to the corresponding information during the suspension of the target network, the information about the target network in an information list maintained by the access network device specifically includes one or more of the following: recording a working status of a user context to prohibit subsequent signaling of a user, ending and reporting statistical information and call detail record data of a user, or detaching, through signaling, a user immediately (or triggered by a timer).

In another example, when the operation type in the network control access update request is resuming the target network, the updating (or modifying), by the access network device to the corresponding information during the activation of the target network, the information about the target network in an information list maintained by the access network device specifically includes one or more of the following: recording a working status of a user context to resume subsequent signaling of a user, resuming statistical information and call detail record data of a user, or allowing subsequent signaling of a user.

In still another example, when the operation type in the network control access update request is modifying the network attribute of the target network, the access network device modifies, based on the operation parameter in the network control access update request, the network attribute of the target network maintained by the access network device.

S608: The access network device sends, to the first functional network element, a second feedback message corresponding to the network control access update request, and correspondingly, the first functional network element receives, from the access network device, the second feedback message corresponding to the network control access update request.

After performing the corresponding operation processing based on the network control access update request, the access network device sends the second feedback message to the first functional network element. The second feedback message includes second operation result information, the second operation result information is used to feed back an operation result of the access network device to the first functional network element, and the second operation result information indicates an operation success or an operation failure. When the second operation result information indicates the operation failure, the second operation result information may include a second failure cause value, and the second failure cause value indicates a specific cause why this operation performed by the access network device fails.

In a possible implementation, the second feedback message may further include one or more of the following: the identifier of the target network, the state (including the activated state or the suspended state) of the target network at the access network device after the operation processing, or the network attribute information of the target network.

S609: The first functional network element sends, to the second functional network element, a third feedback message corresponding to the second control operation request message, and correspondingly, the second functional network element receives, from the first functional network element, the third feedback message corresponding to the second control operation request message.

The third feedback message includes third operation result information, the third operation result information is used to feed back operation results of the first functional network element and the access network device to the second functional network element, and the third operation result is any one of the following cases: 1. When the operation result of the access network device indicates a success and the operation processing result of the first functional network element indicates a success, the operation result information carried in the third feedback message indicates a success. 2. When the operation result of the access network device indicates a failure, or the operation processing result of the first functional network element indicates a failure, the operation result carried in the third feedback message indicates a failure. In this case, the third feedback message may further carry a third failure cause value (indicating a specific cause why the operation result in the third feedback message indicates the failure).

In a possible implementation, the third feedback message may further carry one or more of state information (including the activated state or the suspended state) of the target network at the first functional network element, the identifier of the target network, or the network attribute information of the target network.

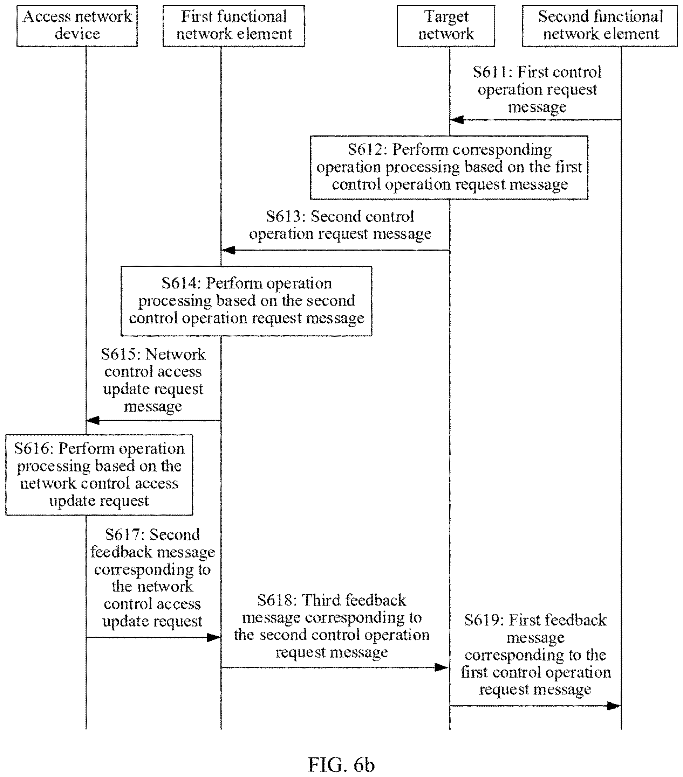

In the case in which the second functional network element indirectly controls the first functional network element, refer to FIG. 6b. FIG. 6b is a schematic flowchart of modifying a target network (modifying a running state of a target network or modifying a network attribute of a target network) according to this application.

S611: The second functional network element sends a first control operation request message to the target network, and correspondingly, the target network receives the first control operation request message from the second functional network element. The first control operation request message includes an operation type.

For a specific implementation of S611, refer to the foregoing descriptions of the specific implementation of S601. Repeated parts are not described again.

S612: The target network performs corresponding operation processing based on the operation type in the first control operation request message.

For a specific implementation of S612, refer to the foregoing descriptions of the specific implementation of S603. Repeated parts are not described again.

S613: The target network sends a second control operation request message to the first functional network element, and correspondingly, the first functional network element receives the second control operation request message from the target network. The second control operation request message includes an operation type.

The second control operation request message is for requesting the first functional network element to perform operation processing, on information about the target network, corresponding to the operation type, that is, one of suspending the target network, resuming the target network, or modifying the network attribute of the target network. In a possible implementation, the second control operation request message may further include identifier information of the target network.

In a possible implementation, when the second control operation request message is used to modify the network attribute of the target network, the second control operation request message may further include an operation parameter.

S614: The first functional network element performs operation processing based on the second control operation request message.

S615: The first functional network element sends a network control access update request message to an access network device, and correspondingly, the access network device receives the network control access update request message from the first functional network element. The network control access update request message includes an operation type.

S616: The access network device performs operation processing based on the network control access update request.

S617: The access network device sends, to the first functional network element, a second feedback message corresponding to the network control access update request, and correspondingly, the first functional network element receives, from the access network device, the second feedback message corresponding to the network control access update request.

For specific implementations of S614 to S617, refer to the foregoing descriptions of the specific implementations of S605 to S608. Repeated parts are not described herein again.

S618: The first functional network element sends, to the target network, a third feedback message corresponding to the second control operation request message, and correspondingly, the target network receives, from the first functional network element, the third feedback message corresponding to the second control operation request message.

For related descriptions of the feedback message corresponding to the second control operation request message, refer to the descriptions in S609. Details are not described herein again.

S619: The target network sends, to the second functional network element, a first feedback message corresponding to the first control operation request message, and correspondingly, the second functional network element receives, from the target network, the first feedback message corresponding to the first control operation request message.

The target network sends the first feedback message to the second functional network element based on the feedback message from the first functional network element and an operation processing result of the target network based on the first control operation request message. The first feedback message includes first operation result information, and the first operation result information is used to feed back operation results of the target network, the first functional network element, and the access network device to the second functional network element. The first operation result information is any one of the following several cases: 1. When the operation result of the first functional network element indicates a success, the operation result of the access network device indicates a success, and the operation processing result of the target network indicates a success, an operation result carried in the first feedback message indicates a success. 2. When the operation result of the first functional network element indicates a failure, the operation result of the access network device indicates a failure, and the operation processing result of the target network indicates a failure, the first feedback message may further carry a failure cause value (indicating a specific cause why an operation result in the first feedback message indicates a failure).

In a possible implementation, the first feedback message may further carry one or more of a state (including an activated state or a suspended state) of the target network at the first functional network element, an identifier of the target network, or network attribute information of the target network.

It can be learned that according to the network resource management method provided in FIG. 3, the terminal device may directly operate the target network by using a core network device. In comparison with a manner in which a user modifies the target network by using an operator, a period for modification of the target network to take effect is shortened, thereby improving efficiency.

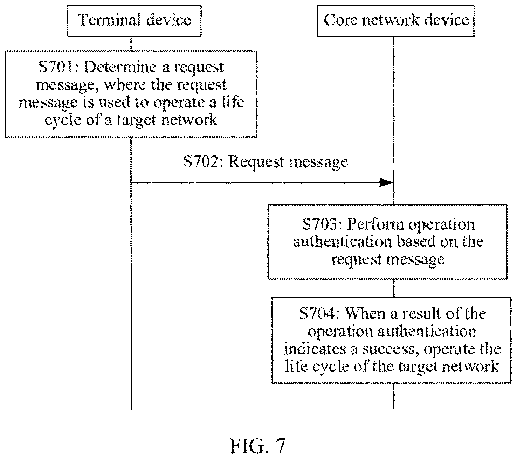

FIG. 7 is a schematic flowchart of another network resource management method according to an embodiment of this application. As shown in FIG. 7, the network resource management method may be executed by a core network device or a chip in a core network device, or may be executed by a terminal device or a chip in a terminal device. FIG. 7 is described by using an example in which the core network device and the terminal device are entities for executing the method.

S701: The terminal device determines a request message, where the request message is used to operate a life cycle of a target network.

S702: The terminal device sends the request message to the core network device, and correspondingly, the core network device receives the request message from the terminal device.

For specific implementations of S701 and S702, refer to the foregoing descriptions of the specific implementations of S301 and S302. Repeated parts are not described herein again.

S703: The core network device performs operation authentication based on the request message.

After the core network device receives the request message from the terminal device, the core network device performs the operation authentication on the request message, to authenticate whether the request message is from the terminal device that is valid (or actually exists), or authenticate whether content of the request message is valid (or understood as being executable by the core network device, that is, the terminal device has operation permission corresponding to the request message). This avoids that the core network device performs an invalid operation based on the request message, and improves security of the target network.

In a possible implementation, that the core network device performs operation authentication based on the request message includes one or more of the following manners.

Manner 1: The core network device authenticates a status of the target network based on the operation type.

In this operation authentication manner of this manner, the core network device determines, based on the status of the target network, whether the target network can perform a processing operation corresponding to the operation type in the request message, that is, the core network device determines whether the operation type matches the status of the target network. If the operation type matches the status of the target network, the core network device successfully authenticates the status of the target network; or if the operation type does not match the status of the target network, the core network device fails to authenticate the status of the target network.

It should be understood that the operation type matching the status of the target network means that the core network device determines, based on the status of the target network, that the target network can perform the processing operation corresponding to the operation type in the request message. Conversely, that the operation type does not match the status of the target network means that the core network device determines, based on the status of the target network, that the target network cannot perform the processing operation corresponding to the operation type in the request message.

In a possible implementation, that the operation type does not match the status of the target network includes one or more of the following: 1. When the operation type is creating the target network, the status of the target network is existing. 2. When the operation type is deleting the target network, the status of the target network is not existing. 3. When the operation type is modifying a network attribute of the target network, the status of the target network is not existing. 4. When the operation type is suspending the target network, the status of the target network is a non-existent or suspended state. 5. When the operation type is resuming the target network, the status of the target network is a non-existent or activated state.

Conversely, when the operation type is creating the target network, if the target network does not exist, it may be determined that the operation type matches the status of the target network. When the operation type is deleting the target network, if the target network exists, it may be determined that the operation type matches the status of the target network. When the operation type is modifying the network attribute of the target network, if the target network exists, it may be determined that the operation type matches the status of the target network. When the operation type is suspending the target network, if the target network exists and is in the activated state, it may be determined that the operation type matches the status of the target network. When the operation type is resuming the target network, if the target network exists and is in the suspended state (or a deactivated state or a standby state), it may be determined that the operation type matches the status of the target network.

Manner 2: The core network device authenticates operation permission of the operation type.

In this operation authentication manner of this manner, the core network device authenticates whether the terminal device that sends the request message has the operation permission corresponding to the operation type. If the terminal device has the operation permission corresponding to the operation type, the core network device successfully authenticates the operation permission of the operation type; or if the terminal device has no operation permission corresponding to the operation type, the core network device fails to authenticate the operation permission of the operation type.

In a possible implementation, the request message further includes user information of the terminal device, and further, the core network device obtains user subscription information based on the user information; and the core network device authenticates the operation permission of the operation type based on the user subscription information and/or according to a local configuration policy. The user subscription information includes one or more of an allowed operation action list, an allowed network identifier list, an allowed network capacity quota, an allowed service user list, or a configuration policy list. The local configuration policy may be understood as a management and control policy of an operator, a management and control policy of the core network device, or the like.

In other words, the core network device may obtain the user subscription information based on the user information of the terminal device, and the user subscription information includes the allowed operation permission of the terminal device. Further, the core network device determines, based on the allowed operation permission of the terminal device in the user subscription information, whether the terminal device can request to perform the operation type in the request message. When the user subscription information includes the operation type in the request message, the core network device successfully authenticates the operation permission of the operation type. Conversely, when the user subscription information does not include the operation type in the request message, the core network device fails to authenticate the operation permission of the operation type (that is, the authentication fails).

For example, the core network device receives a request message sent by a terminal device 1, where the request message includes user information (an identifier of a user A), an operation type (modifying a network attribute of a network 1 (namely, the target network)), and an operation parameter (modifying a network capacity value to a value a3). The core network device obtains subscription information of the user A based on the identifier of the user A, as shown in Table 2.

**Table 2**

| Allowed network identifier list | Allowed operation action list | Allowed network capacity quota |
|---|---|---|
| Network 1 | Creating, suspending, resuming, or modifying a network attribute | a1 and a2 |
| Network 2 | Suspending, resuming, or modifying a network attribute | a1, a2, and a3 |
| Network 3 | Creation and deletion | a2 |

Further, the core network device authenticates operation permission of the request message based on the subscription information of the user A. It can be learned that in the subscription information of the user A, the terminal device may modify the network attribute of the network 1, and may modify a network capacity value of the network 1 to a1 or a2, and the terminal device has no permission of modifying the network capacity value of the network 1 to a3. In this case, the core network device fails to authenticate the operation permission of the operation type in the request message.

It needs to be stated that both operation authentication Manner 1 and operation authentication Manner 2 may be performed, or only one of operation authentication Manner 1 and operation authentication Manner 2 may be performed. This is not specifically limited in this application. In addition, when both operation authentication Manner 1 and operation authentication Manner 2 may be performed, an execution sequence of operation authentication Manner 1 and operation authentication Manner 2 is not specifically limited in this application. That is, operation authentication Manner 1 may be performed before operation authentication Manner 2, or operation authentication Manner 1 may be performed after operation authentication Manner 2, or operation authentication Manner 1 and operation authentication Manner 2 may be performed simultaneously.

In a possible implementation, when a plurality of functional network elements in the core network device are configured to perform the operation authentication, a functional network element that performs operation authentication Manner 1 and a functional network element that performs operation authentication Manner 2 may be a same functional network element, or may be different functional network elements.

S704: When a result of the operation authentication indicates a success, the core network device operates the life cycle of the target network.

After the core network device performs the operation authentication on the request message, if the operation authentication succeeds, the core network device operates the life cycle of the target network based on the operation type and/or the operation parameter in the request message.

In a possible implementation, the core network device sends a first response message to the terminal device based on an operation result of operating the life cycle of the target network, where the first response message includes the status of the target network or an identifier of the target network. In other words, the first response message may indicate that an operation result of operating the life cycle of the target network by the core network device indicates a success. In this case, the first response message may include one or more of an identifier of the target network, a status of the target network after the core network device operates the life cycle of the target network, or network attribute information of the target network. Alternatively, the first response message may indicate that an operation result of operating the life cycle based on the target network by the core network device indicates a failure. In this case, the first response message may include an identifier of the target network, a status of the target network after the core network device operates the life cycle of the target network, network attribute information of the target network, or a failure cause value (where the failure cause value indicates a cause why the life cycle of the target network fails to be operated this time).

In an example, the network capacity value of the network 1 is a1, and the core network device receives the request message sent by the terminal device 1, where the request message includes the user information (the identifier of the user A), the operation type (modifying the network attribute of the network 1 (namely, the target network)), and an operation parameter (modifying the network capacity value to the value a2). If a result of performing the operation authentication on the request message by the core network device indicates a success, the core network device modifies the network capacity value of the network 1 from a1 to a2. Further, a first response message returned by the core network device to the terminal device 1 may include the identifier of the network 1, a state (an existent, available, or activated state) of the network 1, and the network attribute (the network capacity value being a2) of the network 1.

In another example, the network capacity value of the network 1 is a3, and the core network device receives the request message sent by the terminal device 1, where the request message includes the user information (the identifier of the user A), the operation type (modifying the network attribute of the network 1 (namely, the target network)), and an operation parameter (modifying the network capacity value to the value a2). A result of performing the operation authentication on the request message by the core network device indicates a success. After the core network device modifies the network capacity value of the network 1 based on the request message, the network capacity value of the network 1 is a3 (not equal to the capacity value in the operation parameter in the request message). In this case, it may be considered that the core network device fails to operate the life cycle of the network 1. Further, the first response message returned by the core network device to the terminal device 1 may include the identifier of the network 1, the state (the existent, available, or activated state) of the network 1, the network attribute (the network capacity value being a2) of the network 1, and a failure cause value 1 (indicating that the modified network capacity value is the same as the network capacity value before the modification).

In a possible implementation, when a result of the operation authentication indicates a failure, the core network device does not operate the life cycle of the target network. In this case, the core network device may further send a second response message to the terminal device, where the second response message indicates that the operation result of operating the life cycle of the target network indicates a failure. In this case, the second response message may further carry a failure cause value (indicating a cause why the current operation fails). For example, for a mapping relationship between the failure cause value and the failure cause, refer to Table 3.

**Table 3**

| Failure cause value | Failure cause |
|---|---|
| 01 | Non-existent user information |
| 02 | No operation permission corresponding to this operation type |
| 03 | Incorrect operation parameter |

It needs to be noted that the core network device in FIG. 7 may be one or more functional network elements in a core network. This is not specifically limited in this application. In an example, the core network device mentioned in FIG. 7 may include three functional network elements: a functional network element 1, a functional network element 2, and a functional network element 3. The functional network element 1 is configured to receive a request message from the terminal device (that is, perform step S702). The functional network element 2 is configured to perform operation authentication based on the request message (that is, perform step S703). The functional network element 3 is configured to operate a life cycle of the target network when a result of the operation authentication indicates a success (that is, perform step S704). In another example, the core network device mentioned in FIG. 7 includes two functional network elements: a functional network element 1 and a functional network element 2, and the two functional network elements are configured to perform steps S702 to S704. For example, the functional network element 1 is configured to perform steps S702 and S703, and the functional network element 2 is configured to perform step S704; or the functional network element 1 is configured to perform step S702, and the functional network element 2 is configured to perform steps S703 and S704. In still another example, the core network device mentioned in FIG. 7 is a functional network element, and the functional network element is configured to perform steps S702 to S704.

In a possible implementation, if the core network device includes a plurality of functional network elements, and there is a communication connection between the functional network elements, a functional network element configured to receive a message may perform identity authentication on a functional network element configured to send a message. For example, a first functional network element is configured to perform operation authentication based on a request message. The second functional network element is configured to operate a life cycle of a target network. In this case, when a result of the operation authentication indicates a success, the first functional network element sends an indication message (or a second request message) to the second functional network element, where the indication message (or the second request message) is for requesting the second functional network element to operate the life cycle of the target network. The indication message (or the second request message) includes an operation type and/or an operation parameter. The second functional network element receives the indication message (or the second request message), and performs identity verification on the first functional network element; and when the verification succeeds, the second functional network element operates the life cycle of the target network. In this method, system security can be further improved.

According to the network resource management method provided in FIG. 7, the terminal device may directly operate the target network by using the core network device, and the core network device performs an authentication operation on an identity and operation permission of the terminal device, so that system security can be improved while efficiency is improved.

To describe the network resource management method in this application more intuitively, the following describes the network resource management method in this application with reference to the network architecture shown in FIG. 1b.

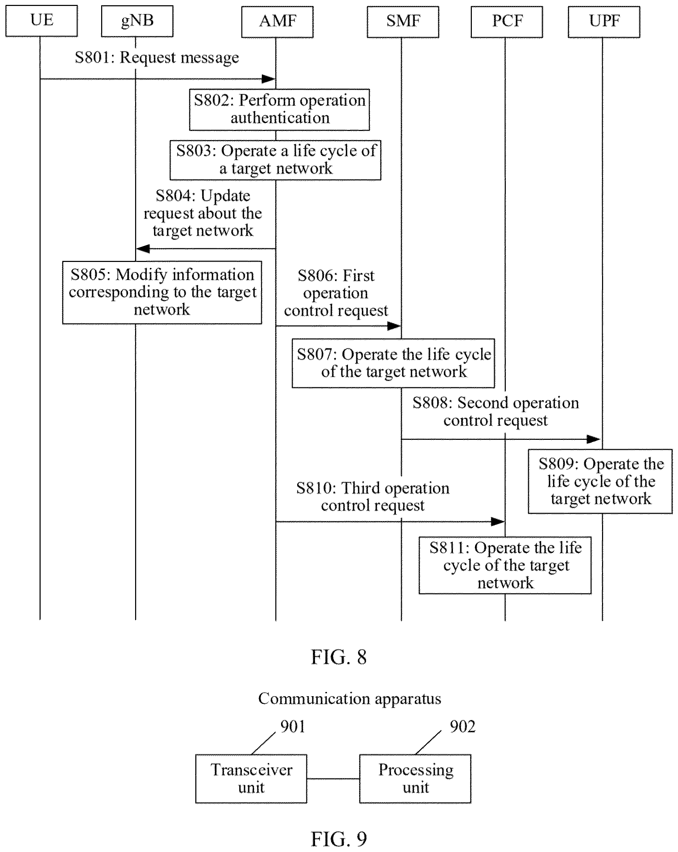

FIG. 8 is a schematic flowchart of still another network resource management method according to an embodiment of this application. As shown in FIG. 8, the network resource management method may be executed by a core network or a chip in a core network, or may be executed by a terminal device or a chip in a terminal device. FIG. 8 is described by using an example in which a specific functional network element in the core network and the terminal device are entities for executing the method.

S801: The terminal device sends a request message to an AMF, and correspondingly, the AMF receives the request message from the terminal device.

The terminal device sends, to the AMF by using an access network device (namely, a gNB in FIG. 8), the request message for requesting to operate a life cycle of a target network. The request message may be a non-access stratum (non-access stratum, NAS) message. Specifically, the request message may be an independent NAS message (that is, a function of the NAS message is used to operate the life cycle of the target network). The request message may be carried in an information element of a NAS message with another function. That is, in addition to the function for requesting to operate the life cycle of the target network, the NAS message further includes another function.

For specific explanations of the "request message", the "target network", and "operating on the life cycle of the target network", refer to the related descriptions in S301. Repeated parts are not described herein again.

S802: The AMF performs operation authentication based on the request message.

For a specific implementation of S802, refer to the foregoing descriptions of the specific implementation of S703. Repeated parts are not described herein again.

After a result of performing the operation authentication by the AMF indicates a success, a process in which the core network operates the life cycle of the target network shown in FIG. 1b is specifically shown in the following S803 to S811.

S803: The AMF operates the life cycle of the target network.

Specifically, that the AMF network element creates the target network means that the AMF network element interacts with an MANO network element or a container management network element, applies for an available running resource, and instantiates a running entity. The running entity may be a newly instantiated virtual machine, a newly instantiated container, or a new process, a thread, or another running execution entity that runs on an existing virtual machine or container. Further, the AMF network element creates the target network based on the request message from the terminal device.

That the AMF deletes the target network means that the AMF network element releases (or deletes) a running resource corresponding to the target network, and deletes instantiation of a running entity for the target network.

The AMF network element suspends the target network, that is, sets a status of the target network to a suspended state (or referred to as a standby state, a to-be-activated state, a deactivated state, or the like). In other words, that the AMF network element suspends the target network means that the AMF network element updates information about the target network maintained by the AMF network element. The updating content includes one or more of the following: recording a working status of a user context to prohibit subsequent signaling of a user, ending and reporting statistical information and call detail record data of a user, or detaching, through signaling, a user immediately (or triggered by a timer).

The AMF network element resumes the target network, that is, changes a status of the target network from a suspended state to an activated state. In other words, that the AMF network element resumes the target network means that the AMF network element updates information about the target network maintained by the AMF network element. The updating content includes: recording a working status of a user context to resume subsequent signaling of a user, resuming statistical information and call detail record data of a user, or allowing subsequent signaling of a user.

That the AMF network element modifies a network attribute of the target network may be understood as that the AMF network element modifies one or more of a capacity of the target network (namely, a capacity-related parameter), a capability of the target network (a network capacity-related parameter), a configuration policy of the target network, or a service user list of the target network. In other words, that the AMF network element modifies a network attribute of the target network means that the AMF network element updates information about the target network maintained by the AMF network element. The updating content includes: 1. Modify a network capability of the target network, for example, enable or disable a device capability or a service (service) corresponding to the target network, where the service is a service provided by each NF defined in 3GPP, and NRF registration and update are triggered. 2. Modify a network capacity of the target network, for example, increase a capacity value of the target network (perform capacity expansion processing), or decrease a capacity value of the target network (perform capacity reduction processing). 3. Modify a user list of the target network, for example, add user information to or delete user information from the user list of the target network, where the user information includes one or more of a subscription permanent identifier (for example, an IMSI/SUPI/MSISDN), a user group identifier, a temporary user identifier (for example, a GUTI), or a device identifier (for example, a PEI/an IME).

S804: (Optional) The AMF sends an update request about the target network to the access network device (namely, the gNB), and correspondingly, the access network device (namely, the gNB) receives the update request about the target network from the AMF.

The AMF sends the update request about the target network to the access network device based on the operation type that is of operating the life cycle of the target network and that is in the request message. The update request about the target network carries information about the operation type, and the update request about the target network indicates the access network device to update (or modify) information about the target network (including radio link side information of the target network, such as a radio scheduling priority and an air interface priority) maintained by the access network device. After receiving the update request about the target network, the access network device performs different operations based on different operation types. Details are as follows.

When the AMF creates the target network (that is, the operation type is creating the target network), the update request is for requesting the access network device to establish a communication connection (or referred to as a link connection, a channel, or the like) to the AMF. A link is a communication connection (or referred to as a link connection, a channel, or the like) between the AMF and the gNB, and the communication connection (or referred to as the link connection, the channel, or the like) is associated with the target network.

When the AMF deletes the target network (that is, the operation type is deleting the target network), the update request is for requesting the access network device to delete a communication connection (or referred to as a link connection, a channel, or the like) to the AMF.

When the AMF suspends the target network (that is, the operation type is modifying a running state of the target network, and is specifically suspending the target network), the update request is for requesting the access network device to interrupt a communication connection (or referred to as a link connection, a channel, or the like) to the AMF.

When the AMF resumes (or activates) the target network (that is, the operation type is modifying a running state of the target network, and is specifically resuming the target network), the update request is for requesting the access network device to resume (or activate) a communication connection (or referred to as a link connection, a channel, or the like) to the AMF.

When the AMF modifies the network attribute of the target network (that is, the operation type is modifying the network attribute of the target network), the update request is for requesting (or indicates) the gNB to modify (or update) information about the target network maintained by the gNB.

S805: (Optional) The gNB modifies, based on the update request for the target network, information (including one or more of link information, an identifier of the target network, or the network attribute of the target network) corresponding to the target network.

The gNB establishes (or deletes) a communication connection (or a channel) about the target network to a first function based on the request for establishing (or deleting) the link connection. That is, the communication connection (or the channel) is associated with the target network.

When the AMF creates the target network, the gNB establishes the communication connection (or referred to as the link connection, the channel, or the like) to the AMF.

When the AMF deletes the target network, the gNB deletes the communication connection (or referred to as the link connection, the channel, or the like) to the AMF.

When the AMF suspends the target network, the gNB interrupts the communication connection (or referred to as the link connection, the channel, or the like) to the AMF.

When the AMF resumes (or activates) the target network, the gNB resumes (or activates) the communication connection (or referred to as the link connection, the channel, or the like) to the AMF.

When the AMF modifies the network attribute of the target network, the gNB modifies (or updates) information about the target network maintained by the gNB.

It needs to be learned that the gNB may establish, delete, interrupt, or resume the link according to a next generation application protocol (next generation application protocol, NGAP) or an SCTP.

It needs to be noted that, when the operation type in the request message is one or more of creating the target network, deleting the target network, or modifying the running state of the target network, specific operations of S804 and S805 are performed. When the operation type in the request message is modifying the network attribute of the target network, if the network attribute of the target network requested to be modified affects the radio link side information of the target network (where the radio link side information includes the radio scheduling priority or the air interface priority), specific operations of S804 and S805 may be performed; or if the network attribute of the target network requested to be modified does not affect the radio link side information of the target network, specific operations of S804 and S805 may not be performed.

S806: (Optional) The AMF sends a first operation control request to the SMF, and correspondingly, the SMF receives the first operation control request from the AMF.

The AMF sends the first operation control request to the SMF based on the operation type that is of operating the life cycle of the target network and that is in the request message. The first operation control request carries the information about the operation type, and the first operation control request indicates (or requests) the SMF to operate the life cycle of the target network. The first operation control request is an N11 interface message. Specifically, the first operation control request may be an independent N11 interface message (that is, a function of the N11 interface message is used to operate the life cycle of the target network). The first operation control request may be carried in an information element of an N11 interface message with another function. That is, in addition to the function for requesting to operate the life cycle of the target network, the N11 interface message further includes another function.

S807: (Optional) The SMF operates the life cycle of the target network.

For a specific implementation in which the SMF operates the life cycle of the target network, refer to the descriptions of the specific implementation in which the AMF operates the life cycle of the target network in S803. Details are not described herein again.

S808: (Optional) The SMF sends a second operation control request to a UPF, and correspondingly, the UPF receives the second operation control request from the SMF.

The SMF sends the second operation control request to the UPF based on the operation type that is of operating the life cycle of the target network and that is in the first operation control request. The second operation control request carries the information about the operation type, and the second operation control request indicates (or requests) the UPF to operate the life cycle of the target network. The second operation control request is an N4 interface message. Specifically, the second operation control request may be an independent N4 interface message (that is, a function of the N4 interface message is used to operate the life cycle of the target network). The second operation control request may be carried in an information element of an N4 interface message with another function. That is, in addition to the function for requesting to operate the life cycle of the target network, the N4 interface message further includes another function.

S809: (Optional) The UPF operates the life cycle of the target network.

For a specific implementation in which the UPF operates the life cycle of the target network, refer to the descriptions of the specific implementation in which the AMF operates the life cycle of the target network in S803. Details are not described herein again.

In a possible implementation, after operating the life cycle of the target network, the UPF sends, to the SMF, a feedback message corresponding to the second operation control request, where the feedback message corresponding to the second operation control request is the N4 interface message. If the UPF fails to operate the life cycle of the target network, the feedback message corresponding to the second operation control request may carry a failure cause value, where the failure cause value indicates a cause why the UPF fails to operate the life cycle of the target network.

In a possible implementation, the SMF sends, to the AMF based on an operation result of operating the life cycle of the target network by the UPF and an operation result of operating the life cycle of the target network by the SMF, a feedback message corresponding to the first operation control request. The feedback message corresponding to the first operation control request is an N11 interface message. If the operation result of operating the life cycle of the target network by the UPF indicates a failure, or the operation result of operating the life cycle of the target network by the SMF indicates a failure, the feedback message corresponding to the first operation control request may carry a failure cause value. The failure cause value indicates a cause why the UPF fails to operate the life cycle of the target network, or the failure cause value indicates a cause why the SMF fails to operate the life cycle of the target network.

It needs to be noted that, when the operation type in the request message is one or more of creating the target network, deleting the target network, or modifying the running state of the target network, specific operations of S806 to S809 are performed. When the operation type in the request message is modifying the network attribute of the target network, if the network attribute of the target network requested to be modified affects a session (for example, a PDU session) or user plane related information of the target network, specific operations of S806 to S809 are performed; or if the network attribute of the target network requested to be modified does not affect a session or user plane related information of the target network, specific operations of S806 to S809 may not be performed.

S810: (Optional) The AMF sends a third operation control request to a PCF, and correspondingly, the PCF receives the third operation control request from the AMF.

The AMF sends the third operation control request to the PCF based on the operation type that is of operating the life cycle of the target network and that is in the request message. The third operation control request carries the information about the operation type, and the third operation control request indicates (or requests) the PCF to operate the life cycle of the target network. The third operation control request is an N15 interface message. Specifically, the third operation control request may be an independent N15 interface message (that is, a function of the N15 interface message is used to operate the life cycle of the target network). The third operation control request may be carried in an information element of an N 15 interface message with another function. That is, in addition to the function for requesting to operate the life cycle of the target network, the N15 interface message further includes another function.

S811: (Optional) The PCF operates the life cycle of the target network.

For a specific implementation in which the PCF operates the life cycle of the target network, refer to the descriptions of the specific implementation in which the AMF operates the life cycle of the target network in S803. Details are not described herein again.

In a possible implementation, after operating the life cycle of the target network, the PCF sends, to the AMF, a feedback message corresponding to the third operation control request, where the feedback message corresponding to the third operation control request is the N15 interface message. If the PCF fails to operate the life cycle of the target network, the feedback message corresponding to the third operation control request may carry a failure cause value, where the failure cause value indicates a cause why the PCF fails to operate the life cycle of the target network.

It needs to be noted that, when the operation type in the request message is one or more of creating the target network, deleting the target network, or modifying the running state of the target network, specific operations of S810 and S811 are performed. When the operation type in the request message is modifying the network attribute of the target network, if the network attribute of the target network requested to be modified affects the configuration policy of the target network, specific operations of S810 and S811 are performed; or if the network attribute of the target network requested to be modified does not affect the configuration policy of the target network, specific operations of S810 and S811 may be performed.

In a possible implementation, after S811 is performed, the AMF records a status of the target network, and feeds back, to the terminal device by using the gNB, an operation result of operating the life cycle of the target network. The status of the target network includes that the target network exists (including the activated state and the suspended state) and that the target network does not exist. In a possible implementation, the AMF may further record a network attribute of the target network.

FIG. 9 is a schematic diagram of a structure of a communication apparatus according to an embodiment of this application. The communication apparatus shown in FIG. 9 may be configured to implement some or all functions of the terminal device in the embodiment corresponding to the network resource management method, or the communication apparatus shown in FIG. 9 may be configured to implement some or all functions of the core network device in the embodiment corresponding to the network resource management method.

In an embodiment, the communication apparatus shown in FIG. 9 may be configured to implement some or all functions of the terminal device in the method embodiment described in FIG. 3 or FIG. 8. The apparatus may be the terminal device, an apparatus in the terminal device, or an apparatus that can be used together with the terminal device. The communication apparatus may alternatively be a chip system. The communications apparatus shown in FIG. 9 may include a transceiver unit 901 and a processing unit 902.

The processing unit 902 is configured to determine a request message, where the request message is used to operate a life cycle of a target network; and the request message is control plane signaling or user plane signaling between the terminal device and a core network device. The transceiver unit 901 is configured to send the request message to the core network device.

In a possible implementation, the request message includes an operation type, and the operation type includes one of creating the target network, deleting the target network, modifying a running state of the target network, or modifying a network attribute of the target network.

In a possible implementation, the modifying the running state of the target network includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the transceiver unit 901 is further configured to receive a response message sent by the core network device, where the response message indicates a result of operating the life cycle of the target network.

In a possible implementation, the target network is a user service function entity or another network function that provides a service for a user.

In an embodiment, the communication apparatus shown in FIG. 9 may be configured to implement some or all functions of the core network device in the method embodiment described in FIG. 3 or FIG. 8. The apparatus may be the core network device, an apparatus in the core network device, or an apparatus that can be used together with the core network device. The communication apparatus may alternatively be a chip system. The communications apparatus shown in FIG. 9 may include a transceiver unit 901 and a processing unit 902.

The transceiver unit 901 is configured to receive a request message from a terminal device, where the request message is used to operate a life cycle of a target network; and the request message is control plane signaling or user plane signaling between the terminal device and the core network. The processing unit 902 is configured to operate, based on the request message, the life cycle that is of the target network and that is managed by the core network device.

In a possible implementation, the request message includes an operation type, and the operation type includes one of creating the target network, deleting the target network, modifying a running state of the target network, or modifying a network attribute of the target network.

In a possible implementation, the modifying the running state of the target network includes suspending the target network or resuming the target network.

In a possible implementation, the modifying the network attribute of the target network includes one or more of modifying a capacity of the target network, modifying a capability of the target network, modifying a configuration policy of the target network, or modifying a service user list of the target network.

In a possible implementation, the processing unit 902 is further configured to perform operation authentication based on the request message. When a result of the operation authentication indicates a success, the processing unit 902 operates the life cycle of the target network. Alternatively, when a result of the operation authentication indicates a failure, the processing unit 902 does not operate the life cycle of the target network.

In a possible implementation, that the processing unit 902 performs operation authentication based on the request message includes one or more of the following: authenticating a status of the target network based on the operation type; or authenticating operation permission of the operation type.

In a possible implementation, if the operation type matches the status of the target network, the processing unit 902 successfully authenticates the status of the target network; or if the operation type does not match the status of the target network, the processing unit 902 fails to authenticate the status of the target network.

In a possible implementation, that the operation type does not match the status of the target network includes: when the operation type is creating the target network, the status of the target network is the existent state; when the operation type is deleting the target network, the status of the target network is the non-existent state; when the operation type is modifying the network attribute of the target network, the status of the target network is the non-existent state; or when the operation type is modifying the running state of the target network, the status of the target network is the non-existent state.

In a possible implementation, the existent state includes a suspended state and an activated state, and when the operation type is modifying the running state of the target network, that the operation type does not match the status of the target network further includes: when the operation type is suspending the target network, the status of the target network is the suspended state; or when the operation type is resuming the target network, the status of the target network is the activated state.

In a possible implementation, the request message further includes one or more of user information of the terminal device, an operation parameter corresponding to the operation type, or information about the target network.

In a possible implementation, the user information includes one or more of a subscription permanent identifier, a user group identifier, or a temporary user identifier.

In a possible implementation, the information about the target network includes one or more of an identifier, a capacity value, a capability list, the service user list, or a configuration policy list of the target network.

In a possible implementation, the processing unit 902 obtains user subscription information based on the user information; and authenticates the operation permission of the operation type based on the user subscription information and/or according to a local configuration policy.

In a possible implementation, the user subscription information includes one or more of an allowed operation action list, an allowed network identifier list, an allowed network capacity quota, the allowed service user list, or the configuration policy list.

In a possible implementation, when a result of the operation authentication indicates a success, the transceiver unit 901 sends a first response message to the terminal device based on an operation result of operating the life cycle of the target network, where the first response message includes the status of the target network and the identifier of the target network. Alternatively, when a result of the operation authentication indicates a failure, the transceiver unit 901 sends a second response message to the terminal device, where the second response message indicates that an operation result of operating the life cycle of the target network indicates a failure.

In a possible implementation, the target network is a user service function entity or another network function that provides a service for a user.

For more detailed descriptions of the transceiver unit 901 and the processing unit 902, refer to the related descriptions of the terminal device or the core network in the foregoing method embodiment. Details are not described herein again.

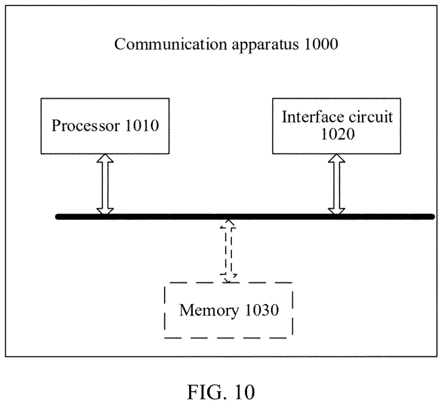

FIG. 10 is a schematic diagram of a structure of a communication apparatus 1000 according to this application. The communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the method in the foregoing method embodiment, the processor 1010 is configured to perform a function of the foregoing processing unit 902, and the interface circuit 1020 is configured to perform a function of the foregoing transceiver unit 901.

When the communication apparatus is a chip used in a terminal device, the chip in terminal device implements a function of the terminal device in the foregoing method embodiment. The chip in the terminal device receives information from another network element; or the chip in the terminal device sends information to another network element.

When the communication apparatus is a chip used in a core network, the chip in the core network implements a function of the core network in the foregoing method embodiment. The chip in the core network receives information from another network element; or the chip in the core network sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in an access network device or a terminal device. Certainly, the processor and the storage medium may alternatively exist in a terminal device or a core network as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a digital versatile disc (digital versatile disc, DVD); or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions, and when the computer-executable instructions are executed, the method performed by the terminal device or the core network in the foregoing method embodiment is implemented.

An embodiment of this application further provides a computer program product. The computer program product includes a computer program, and when the computer program is executed, the method performed by the terminal device or the core network in the foregoing method embodiment is implemented.

An embodiment of this application further provides a communication system. The communication system includes a terminal device or a core network. The terminal device is configured to perform the method performed by the terminal device in the foregoing method embodiment. The core network is configured to perform the method performed by the core network in the foregoing method embodiment.

It needs to be noted that, for brief description, the foregoing method embodiments are represented as a series of actions. However, persons skilled in the art should appreciate that this application is not limited to the described sequence of the actions, because according to this application, some steps may be performed in other sequences or simultaneously. It should be further appreciated by persons skilled in the art that embodiments described in this specification all belong to preferred embodiments, and the related actions and modules are not necessarily required by this application.

The descriptions of the embodiments provided in this application may refer to each other, and the descriptions of the embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended to describe the technical solutions of this application, but are not intended to limit this application. Although this application is specifically described with reference to the foregoing embodiments, persons of ordinary skill in the art should understand that they may still make modifications to the technical solutions recorded in the foregoing embodiments, or make equivalent replacements to some or all technical features thereof, without departing from the scope of the technical solutions of embodiments of this application.

## Claims

1. A network resource management method, wherein the method comprises:
generating, by a terminal device, a request message, wherein the request message is used to operate a life cycle of a target network; and the request message is control plane signaling or user plane signaling between the terminal device and a core network;
sending, by the terminal device, the request message to the core network; and
operating, by the core network based on the request message, the life cycle that is of the target network and that is managed by the core network.

2. The method according to claim 1, wherein the request message comprises information about an operation type, and the operation type comprises one or more of creating the target network, deleting the target network, modifying a running state of the target network, or modifying a network attribute of the target network.

3. The method according to claim 2, wherein the modifying the running state of the target network comprises suspending the target network or resuming the target network.

4. The method according to claim 2 or 3, wherein the operating, by the core network based on the request message, the life cycle that is of the target network and that is managed by the core network comprises:
performing, by the core network, operation authentication based on the request message; and
when a result of the operation authentication indicates a success, operating, by the core network, the life cycle of the target network.

5. The method according to claim 4, wherein the performing, by the core network, operation authentication based on the request message comprises one or more of the following:
authenticating, by the core network, a status of the target network based on the operation type; or
authenticating, by the core network, operation permission of the operation type.

6. The method according to claim 5, wherein the authenticating, by the core network, a status of the target network based on the operation type comprises:
if the operation type matches the status of the target network, successfully authenticating, by the core network, the status of the target network.

7. The method according to claim 6, wherein the status of the target network comprises an existent state or a non-existent state, and that the operation type matches the status of the target network comprises:
when the operation type is creating the target network, the status of the target network is the non-existent state;
when the operation type is deleting the target network, the status of the target network is the existent state;
when the operation type is modifying the network attribute of the target network, the status of the target network is the existent state; or
when the operation type is modifying the running state of the target network, the status of the target network is the existent state.

8. The method according to claim 7, wherein the existent state comprises a suspended state or an activated state, and when the operation type is modifying the running state of the target network, that the operation type matches the status of the target network further comprises:
when the operation type is suspending the target network, the status of the target network is the activated state; or
when the operation type is resuming the target network, the status of the target network is the suspended state.

9. The method according to any one of claims 5 to 8, wherein the request message further comprises user information of the terminal device, and the authenticating, by the core network, operation permission of the operation type comprises:
obtaining, by the core network, user subscription information based on the user information; and
authenticating, by the core network, the operation permission of the operation type based on the user subscription information and/or according to a local configuration policy.

10. The method according to claim 9, wherein the user subscription information comprises one or more of an allowed operation action list, an allowed network identifier list, an allowed network capacity quota, an allowed service user list, or a configuration policy list.

11. The method according to any one of claims 4 to 10, wherein the method further comprises:
sending, by the core network, a first response message to the terminal device based on an operation result of operating the life cycle of the target network, wherein the first response message comprises the status of the target network or an identifier of the target network.

12. A network resource management method, wherein the method comprises:
generating, by a terminal device, a request message, wherein the request message is used to operate a life cycle of a target network; and the request message is control plane signaling or user plane signaling between the terminal device and a core network device; and
sending, by the terminal device, the request message to the core network device.

13. The method according to claim 12, wherein the request message comprises an operation type, and the operation type comprises one of creating the target network, deleting the target network, modifying a running state of the target network, or modifying a network attribute of the target network.

14. The method according to claim 13, wherein the modifying the running state of the target network comprises suspending the target network or resuming the target network.

15. The method according to any one of claims 12 to 14, wherein the method further comprises:
receiving, by the terminal device, a response message sent by the core network device, wherein the response message indicates a result of operating the life cycle of the target network.

16. A network resource management method, wherein the method comprises:
receiving, by a core network device, a request message from a terminal device, wherein the request message is used to operate a life cycle of a target network; and the request message is control plane signaling or user plane signaling between the terminal device and the core network; and
operating, by the core network device based on the request message, the life cycle that is of the target network and that is managed by the core network device.

17. The method according to claim 16, wherein the request message comprises an operation type, and the operation type comprises one of creating the target network, deleting the target network, modifying a running state of the target network, or modifying a network attribute of the target network.

18. The method according to claim 17, wherein the modifying the running state of the target network comprises suspending the target network or resuming the target network.

19. The method according to claim 17 or 18, wherein the operating, based on the request message, the life cycle that is of the target network and that is managed by the core network device comprises:
performing, by the core network device, operation authentication based on the request message; and
when a result of the operation authentication indicates a success, operating the life cycle of the target network.

20. The method according to claim 19, wherein the performing, by the core network device, operation authentication based on the request message comprises one or more of the following:
authenticating, by the core network device, a status of the target network based on the operation type; or
authenticating, by the core network device, operation permission of the operation type.

21. The method according to claim 20, wherein the authenticating, by the core network device, a status of the target network based on the operation type comprises:
if the operation type matches the status of the target network, successfully authenticating, by the core network device, the status of the target network.

22. The method according to claim 21, wherein the status of the target network comprises an existent state or a non-existent state, and that the operation type matches the status of the target network comprises:
when the operation type is creating the target network, the status of the target network is the non-existent state;
when the operation type is deleting the target network, the status of the target network is the existent state;
when the operation type is modifying the network attribute of the target network, the status of the target network is the existent state; or
when the operation type is modifying the running state of the target network, the status of the target network is the existent state.

23. The method according to claim 22, wherein the existent state comprises a suspended state and an activated state, and when the operation type is modifying the running state of the target network, that the operation type matches the status of the target network further comprises:
when the operation type is suspending the target network, the status of the target network is the activated state; or
when the operation type is resuming the target network, the status of the target network is the suspended state.

24. The method according to any one of claims 19 to 23, wherein the request message further comprises user information of the terminal device, and the authenticating, by the core network device, operation permission of the operation type comprises:
obtaining, by the core network device, user subscription information based on the user information; and
authenticating, by the core network device, the operation permission of the operation type based on the user subscription information and/or according to a local configuration policy.

25. The method according to claim 24, wherein the user subscription information comprises one or more of an allowed operation action list, an allowed network identifier list, an allowed network capacity quota, an allowed service user list, or a configuration policy list.

26. The method according to any one of claims 16 to 25, wherein the method further comprises:
sending, by the core network device, a first response message to the terminal device based on an operation result of operating the life cycle of the target network, wherein the first response message comprises the status of the target network.

27. The method according to any one of claims 2 to 15 or 17 to 25, wherein the modifying the network attribute of the target network comprises one or more of modifying a capacity of the target network, modifying a capability of the target network, modifying a configuration policy of the target network, or modifying the service user list of the target network.

28. The method according to any one of claims 1 to 27, wherein the request message further comprises one or more of the user information of the terminal device, an operation parameter corresponding to the operation type, or information about the target network.

29. The method according to claim 28, wherein the user information comprises one or more of a subscription permanent identifier, a user group identifier, or a temporary user identifier.

30. The method according to claim 28 or 29, wherein the information about the target network comprises one or more of an identifier, a capacity value, a capability list, the service user list, or the configuration policy list of the target network.

31. The method according to any one of claims 1 to 30, wherein the target network is a user service function entity or another network function that provides a service for a user.

32. A communication apparatus, comprising a module configured to perform the method according to any one of claims 12 to 15 or 27 to 31, or a module configured to perform the method according to any one of claims 16 to 31.

33. A communication apparatus, comprising a processor, wherein the processor is coupled to a memory, the memory stores instructions, and the processor is configured to execute the instructions, to enable the communication apparatus to perform the method according to any one of claims 12 to 15 or 27 to 31, or the method according to any one of claims 16 to 31.

34. The communication apparatus according to claim 33, further comprising one or more of the memory and a transceiver, wherein the transceiver is configured to: receive and send data and/or signaling.

35. A chip, comprising a processor and an interface, wherein the processor is coupled to the interface; and
the interface is configured to: receive or output a signal, and the processor is configured to execute code instructions, so that the method according to any one of claims 12 to 15 or 27 to 31, or the method according to any one of claims 16 to 31 is performed.

36. A communication system, wherein the communication system comprises a terminal device and a core network device, the terminal device is configured to perform the method according to any one of claims 12 to 15 or 27 to 31, and the core network device is configured to perform the method according to any one of claims 16 to 31.

37. A computer-readable storage medium, wherein the computer-readable storage medium stores computer-executable instructions, and when the computer-executable instructions are invoked by a computer, the method according to any one of claims 12 to 15 or 27 to 31 is performed, or when the computer-executable instructions are invoked by a computer, the method according to any one of claims 16 to 31 is performed.

38. A computer program product comprising a computer program, wherein when the computer program is executed, the method according to any one of claims 12 to 15 or 27 to 31, or the method according to any one of claims 16 to 31 is performed.
